# EUROPEAN PATENT APPLICATION

(11) **EP 1 736 898 A1**
(43) Date of publication of application: **27.12.2006**
(21) Application number: 05727605.7
(22) Date of filing: 31.03.2005
(51) Int. Cl.: G06F 17/30

(54) **DATA SELECTION DEVICE, METHOD, PROGRAM, AND RECORDING MEDIUM**

(30) Priority: 31.03.2004 JP 2004106183
(71) Applicant: Pioneer Corporation, Tokyo 153-8654 (JP)
(72) Inventor: SUGIE, Shinichi, Pioneer Corporation, Tsurugashima-shi, Saitama 3502288 (JP); ICHIHARA, Naohiko, Pioneer Corporation, Tsurugashima-shi, Saitama 3502288 (JP); KOGA, Yuji, Pioneer Corporation, Tsurugashima-shi, Saitama 3502288 (JP); TOYAMA, Soichi, Pioneer Corporation, Tsurugashima-shi, Saitama 3502288 (JP)
(74) Representative: Tappe, Hartmut
(86) International application number: PCT/JP2005/006358
(87) International publication number: WO 2005/096183

(57) **Abstract**

The present invention is directed to provide a data selecting apparatus and a navigation apparatus capable of easily and promptly selecting one piece of data from a plurality of pieces of data. A navigation apparatus 100 has: a display controller 111 for obtaining name data and genre information of each point data from a map data storing unit 105, generating display data for displaying names of the point data, which are arranged by the genre information at the same hierarchical level on the basis of the obtained name data and genre information, and performing the display control on the generated display data; and an operating unit 106 used for selecting a genre to which point data to be selected by the user belongs and selecting a name of one piece of the point data from the selected genre. The display controller 111 performs generation of display data for displaying the genre selected by the operating unit 106 and display control on the display data or performs generation of display data at the time when the name of point data is selected by the operating unit 106 and display control on the display data interlockingly with selecting operation executed by using the operating unit 106.

## Description

### Technical Field

The present invention relates to a technical field of a data selecting apparatus for selecting, for example, actual data to be selected such as data of a destination in the case of performing navigation from a plurality of pieces of actual data.

### Background Art

In recent years, with development of personal computers and graphic user interfaces (GUI), it is being widespread that apparatuses such as a navigation apparatus and a communication terminal, and the like allow the user to enter or select predetermined data while interacting with the user. In each of various kinds of such apparatuses, a plurality of pieces of actual data to be selected are pre-stored. The plurality of pieces of actual data are provided to the user, and the user is allowed to select one or a plurality of pieces of actual data.

For example, in the case of a navigation apparatus for navigating a mobile body such as a vehicle on the basis of map data, point data of a plurality of points such as amusement facilities, accommodations, and sightseeing spots is pre-stored in the navigation apparatus. By selecting the point data, a destination to reach can be set. In particular, the navigation apparatus displays the point data in the order of the Japanese syllabary in names of the points, the order of latitudes of the point data, or the order of use frequency showing whether the user has visited the points or not so that the user can select necessary information (refer to, for example, Patent Document 1).
Patent Document 1: Japanese Unexamined Patent Publication No. H9-257501

### Disclosure of the Invention

### Problems to be Solved by the Invention

In an apparatus for allowing data to be selected such as the navigation apparatus, however, at the time of displaying actual data to be selected by the user such as point data, the actual data is displayed hierarchically, so that the selecting operation is complicated. Moreover, in the apparatuses, in many cases, data in a hierarchy cannot be selected or retrieved in a cross-cut manner. That is, it is often difficult to promptly and easily select data in another hierarchy at the same level.

The present invention has been achieved in view of the problems and an object of the invention is to provide a data selecting apparatus and a navigation apparatus capable of easily and promptly selecting a piece of data from a plurality of pieces of data.

### Means for solving the Problems

In order to solve the above problems, the invention of claim 1 relates to a data selecting apparatus for obtaining actual data by allowing the user to select at least one piece of actual data from a plurality of pieces of actual data to be selected by the user, which are stored in storing means,
wherein when each of the plurality of pieces of actual data is stored so as to be associated with attribute information indicative of attribute of the actual data and name information indicative of the name of the actual data, the apparatus comprises:
first obtaining means for obtaining the name information and attribute information of each actual data from the storing means;
display control means for generating display data for displaying the name information of the actual data, which is arranged by the attribute information at the same hierarchical level on the basis of the obtained attribute information, and displaying the generated display data on display means;
first selecting means used for selecting an attribute information group to which actual data to be selected by the user belongs;
second selecting means used for selecting a name of one piece of the actual data from the selected attribute information group; and
second obtaining means for obtaining actual data having the name on the basis of the name of the actual data selected with the second selecting means from the storing means.

The invention of claim 14 relates to a navigation apparatus for obtaining point data by allowing the user to select at least one piece of point data frompoint data of points stored in storing means,
wherein when each of the plurality of pieces of point data is stored so as to be associated with attribute information indicative of attribute of the point data and name information indicative of the name, the apparatus comprises:
first obtaining means for obtaining the name information and attribute information of each point data from the storing means;
display control means for generating display data for displaying the name information of the point data, which is arranged by the attribute information at the same hierarchical level on the basis of the obtained attribute information, and displaying the generated display data on display means;
first selecting means used for selecting an attribute information group to which point data to be selected by the user belongs;
second selecting means used for selecting a name of one piece of the point data from the selected attribute information group;
second obtaining means for obtaining point data having the name on the basis of the name of the point data selected with the second selecting means from the storing means; and
setting means for setting a destination in route guidance on the basis of the obtained point data.

The invention of claim 19 relates to a data selecting method for obtaining actual data by allowing the user to select at least one piece of actual data from a plurality of pieces of actual data to be selected by the user, which are stored in storing means,
wherein when each of the plurality of pieces of actual data is stored so as to be associated with attribute information indicative of attribute of the actual data and name information indicative of the name of the actual data, the method comprises:
a first obtaining step of obtaining the name information and attribute information of each actual data from the storing means;
a display step of generating display data for displaying the name information of the actual data, which is arranged by the attribute information at the same hierarchical level on the basis of the obtained attribute information, and displaying the generated display data on display means; and
a second obtaining step of, when the name of one piece of actual data is selected from the displayed attribute information group by using selecting means on the basis of the display data displayed on the display means, obtaining actual data having the name of the selected actual data from the storing means.

The invention of claim 21 relates to a navigation method for obtaining point data by allowing the user to select at least one piece of point data from points stored in storing means,
wherein when each of the plurality of pieces of point data is stored so as to be associated with attribute information indicative of attribute of the actual data and name information indicative of the name of the data, the method comprises:
a first obtaining step of obtaining the name information and attribute information of each point data from the storing means;
a display step of generating display data for displaying the name information of the point data, which is arranged by the attribute information at the same hierarchical level on the basis of the obtained attribute information, and displaying the generated display data on display means;
a second obtaining step of, when the name of one piece of point data is selected from the displayed attribute information group by using selecting means on the basis of the display data displayed on the display means, obtaining point data having the name of the selected point data from the storing means; and
a setting step of setting a destination in route guidance on the basis of the obtained point data.

The inventions of claim 23 and 25 relate to a data selecting program for obtaining actual data by allowing the user to select at least one piece of actual data from a plurality of pieces of actual data to be selected by the user, which are stored in storing means by a computer,
wherein when each of the plurality of pieces of actual data is stored so as to be associated with attribute information indicative of attribute of the actual data and name information indicative of the name, the computer is allowed to function as:
first obtaining means for obtaining the name information and attribute information of each actual data from the storing means;
display control means for generating display data for displaying the name information of the actual data, which is arranged by the attribute information at the same hierarchical level on the basis of the obtained attribute information, and displaying the generated display data on display means; and
second obtaining means for, when the name of one piece of actual data is selected from the displayed attribute information group by using selecting means on the basis of the display data displayed on the display means, obtaining actual data having the name of the selected actual data from the storing means.

The inventions of claim 26 and 28 relate to a navigation program for obtaining point data by allowing the user to select at least one piece of point data from point data of points stored in storing means,
wherein when each of the plurality of pieces of point data is stored so as to be associated with attribute information indicative of attribute of the actual data and name information indicative of the name of the data, the computer is allowed to function as:
first obtaining means for obtaining the name information and attribute information of each point data from the storing means;
display control means for generating display data for displaying the name information of the point data, which is arranged by the attribute information at the same hierarchical level on the basis of the obtained name information and attribute information, and displaying the generated display data on display means;
second obtaining means for, when the name of one piece of point data is selected from the displayed attribute information group by using selecting means on the basis of the display data displayed on the display means, obtaining point data having the name of the selected point data from the storing means; and
setting means for setting a destination in route guidance on the basis of the obtained point data.

### Brief Description of the Drawings

FIG. 1 is a block diagram showing a schematic configuration of a navigation apparatus of a first embodiment according to the present invention.
FIG. 2 shows an example of a data configuration of point data stored in a map data storing unit 105 of the first embodiment.
FIG. 3 shows an example of di-splay data which is gener-ated by a display controller and displayed on a display in the first embodiment.
FIG. 4 is a flowchart (I) showing operations of a route guiding step setting process and a destination setting process in a system controller of the first embodiment.
FIG. 5 is a flowchart (II) showing operations of the route guiding step setting process and the destination setting process in the system controller of the first embodiment.
FIG. 6 shows another example (I) of the display data which is generated by the display controller and displayed on the display in the first embodiment.
FIG. 7 shows another example (II) of the display data which is generated by the display controller and displayed on the display in the first embodiment.
FIG. 8 shows another example (III) of the display data which is generated by the display controller and displayed on the display in the first embodiment.
FIG. 9 shows another example (IV) of the display data which is generated by the display controller and displayed on the display in the first embodiment.
FIG. 10 is a flowchart showing a process of displaying name data by genre on the basis of priority in the system controller of the first embodiment.
FIG. 11 is a flowchart showing a process of setting the point data to a destination in the system controller of the first embodiment.
FIG. 12 is a block diagram showing a schematic configuration of a navigation apparatus of a second embodiment according to the present invention.
FIG. 13 shows an example of a data configuration of point data stored in the map data storing unit 105 of the second embodiment.
FIG. 14 shows an example (I) of the configuration of keyword table data of the second embodiment.
FIG. 15 shows an example (II) of the configuration of the keyword table data of the second embodiment.
FIG. 16 shows an example of the data configuration of genre table data of the second embodiment.
FIG. 17 shows an example of the data configuration of a season data table of the second embodiment.
FIG. 18 shows an example of the display data which is generated by the display controller and displayed on the display in the second embodiment.
FIG. 19 is a flowchart (I) showing operations of a route guiding step setting process and a destination setting process in the system controller of the second embodiment.
FIG. 20 is a flowchart (II) showing operations of the route guiding step setting process and the destination setting process in the system controller of the second embodiment.

### Description of Reference Numerals

- 100, 200 :: navigation apparatuses
- 105, 201 :: map data storing unit
- 106 :: operating part
- 106A :: genre scroll-up button
- 106B :: genre scroll-down button
- 106C :: up select button
- 106D :: down select button
- 106E :: confirmation button
- 109 :: display
- 111, 203 :: display controllers
- 114, 204 :: system controllers

### Best Mode for carrying out the Invention

Preferred embodiments of the present invention will be described with reference to the drawings.

The embodiments to be described below relate to the case of applying a data selecting apparatus or a navigation apparatus according to the present invention to an on-vehicle navigation apparatus.

### First Embodiment

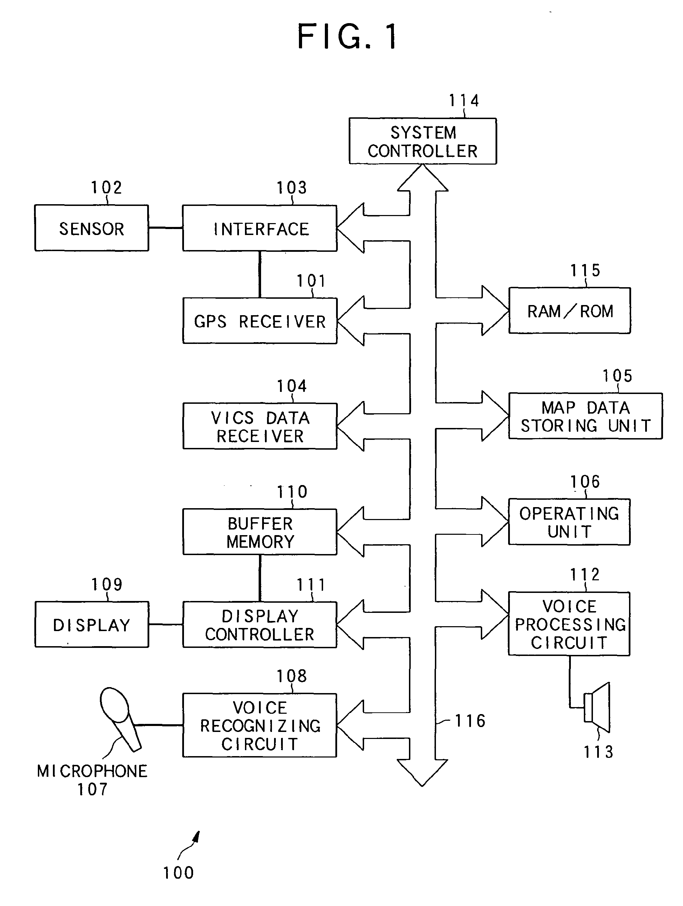

First, a first embodiment of a navigation apparatus according to the invention will be described with reference to FIGS. 1 to 10.

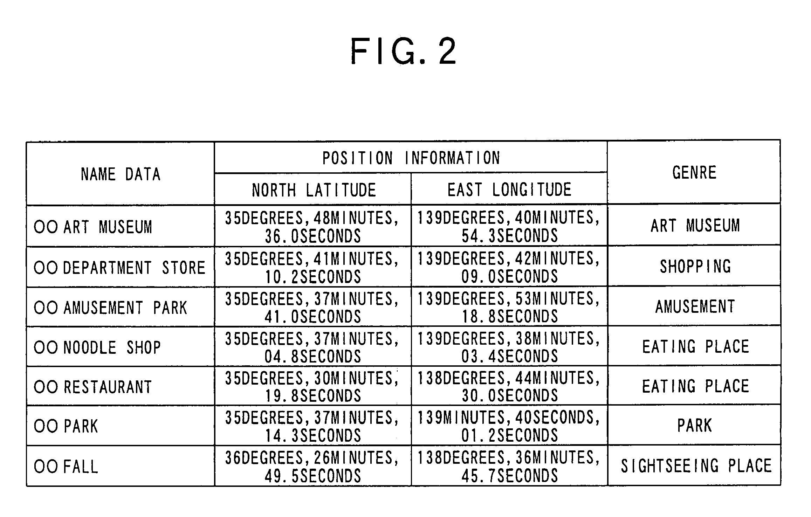

A general configuration and general operation of the navigation apparatus in the first embodiment will be described with reference to FIGS. 1 and 2. FIG. 1 is a block diagram showing a schematic configuration of the navigation apparatus of the first embodiment according to the present invention. FIG. 2 shows an example of a data configuration of point data stored in a map data storing unit 105 of the first embodiment.

A navigation apparatus 100 of the embodiment has a GPS (Global Positioning System) receiver 101 connected to an antenna AT and receiving GPS data, a sensor 102 for detecting travel data such as travel speed of a vehicle, an interface 103 for calculating the position of the vehicle on the basis of the GPS data and the travel data, a VICS (Vehicle Information Communication System) data receiver 104 for receiving VICS data, the map data storing unit 105 in which various data such as the map data and point data to be described later is recorded in advance, and an operating unit 106 used by the user to make settings and enter a command to the system.

The navigation apparatus 100 of the embodiment also has a microphone 107 for collecting voice of the user, a voice recognizing circuit 108 for recognizing a command given to the system from the voice collected by the microphone 107, a display 109 for displaying the map data and the position of the vehicle, a display controller 111 for controlling the display 109 by using a buffer memory 110, a voice processing circuit 112 for generating voice of navigation and the like, a speaker 113 for amplifying a sound signal which is output from the voice processing circuit 112, a system controller 114 for performing controls for route guidance by controlling processes in route search, generation of a route guiding process, and route guidance and controlling the whole system, and a ROM/RAM 115. The system controller 114 and the components are connected to each other via a bus 117.

For example, the map data storing unit 105 of the embodiment corresponds to storing means in the invention. The display controller 111 corresponds to first obtaining means, display controlling means, and second obtaining means. For example, the operating unit 106 of the embodiment corresponds to first selecting means, second selecting means, choosing means, confirming means, preceding-part switching means, subsequent-part switching means, and designating means of the invention. The system controller 114 corresponds to controlling means and calculating means of the invention.

The GPS receiver 101 receives navigation radio waves from a plurality of artificial satellites belonging to the GPS via the antenna AT, calculates a pseudo coordinate value of a moving body on the basis of the received radio waves, and outputs the calculated value as GPS data to the interface 103.

The sensor 102 detects travel data such as travel speed, acceleration, and azimuth of the vehicle and outputs the detected travel data to the interface 103. Concretely, the sensor 102 detects travel speed of the vehicle, converts the detected speed to velocity data having a form of pulse or voltage, and outputs the resultant to the interface 103.

The sensor 102 detects a movement state of the vehicle in the vertical direction by comparison between gravitational acceleration and acceleration generated by movement of the vehicle, converts acceleration data indicative of the detected movement state to a form of pulse or voltage, and outputs the resultant to the interface 103.

Further, the sensor 102 is a so-called gyro sensor, detects the azimuth of the vehicle, that is, the travel direction of the vehicle, converts the detected azimuth to azimuth data having the form of pulse or voltage, and outputs the resultant to the interface 103.

The interface 103 performs an interface process between the sensor 102 and the GPS receiver 101 and the system controller 114, calculates the position of the vehicle on the basis of input GPS data and travel data, and outputs the vehicle position as vehicle position data to the system controller 114.

The vehicle position data is collated with the map data in the system controller 114 and used for a map matching process and a process related to navigation such as a route searching process.

The VICS data receiver 104 obtains VICS data by receiving radio waves of FM multiple broadcasting or the like, and outputs the obtained VICS data to the system controller 114. The VICS denotes a vehicle information communication system and the VICS data denotes traffic information such as traffic jam, accident, and traffic control.

The map data storing unit 105 is, for example, a hard disc, reads map data such as a road map which is preliminarily recorded, point data of a destination to be registered which will be described later, and other information necessary for travel guidance (hereinbelow, called map data or the like), and outputs the read map data or the like to the system controller 114.

In particular, in the map data storing unit 105, map data corresponding to each of a plurality of blocks in a mesh state of a whole map is stored as block map data. In the map data storing unit 105, in addition to map data including road shape data necessary for navigating operation, point data is stored, in which various related data such as names of destinations of parks, shops, and the like, positional data, and the like is associated with the road shape data.

Concretely, in the map data storing unit 105, as the point data, for example, data related to points which are set as destinations including shops such as restaurants and department stores, amusement facilities, sightseeing spots, museums and so on is stored. For example, as shown in FIG. 2, together with name data such as facility names and place names, genre information indicative of genres (also called attributes) of the visiting places at the points such as restaurants, seeing places, amusement facilities, and positional information indicative of the latitude and longitude of each point is stored.

The genre information indicates, for example, genres of eating places, shops other than the eating places, amusement places, visiting places, sightseeing places such as falls and lakes. As will be described later, on generation of display data at the time of setting a destination, the genre data is referred to together with the name data. The information is displayed genre by genre on the display 109.

The operating unit 106 includes various confirmation buttons, select buttons, and a number of keys such as numerical keys and is used for entering a command for displaying vehicle travel information and a driver's command for switching display of the display 109. In particular, the operating unit 106 has genre scroll-up/scroll-down buttons 106A and 106B, select buttons 106C and 106D, and a confirmation button 106E. , At the time of registering a destination in a route guiding step which will be described later into the system controller 114, operations are performed interlockingly with the display 109 and the display controller 111.

The operations performed interlockingly with the display 109 and the display controller 111 in the operating unit 106 of the embodiment will be described later.

For example, the genre scroll-up button 106A of the embodiment corresponds to first selecting means and preceding-part switching means of the present invention. The genre scroll-down button 106B corresponds to first selecting means and preceding-part switching means of the present invention. Further, for example, the select buttons 106C and 106D of the embodiment correspond to second selecting means and choosing means of the present invention, and the confirmation button 106E corresponds to confirming means of the present invention.

To the voice recognizing circuit 108, voice generated from the user or the like which is input to the microphone 107 is entered. For example, the voice recognizing circuit 108 analyzes generated voice which is entered as an operation command of the navigation apparatus 100 and outputs the analysis result to the system controller 114.

The display 109 is constructed by, for example, a CRT or a liquid crystal display device. The display 109 displays the map data or the like in various modes under control of the display controller 111 and also displays various states necessary for route guidance, such as the position of the vehicle so as to be superimposed on the map data or the like.

The display 109 displays contents information other than the map data or the like and also displays display data for setting a target at the time of generating the route guiding step which will be described later. The display 109 displays the display data interlockingly with the operating unit 106 under control of the display controller 111. The details of the display data displayed on the display 109 in the embodiment will be described later.

To the display controller 111, the map data or the like entered via the system controller 114 is input. The display controller 111 generates display data to be displayed on the display 109 on the basis of an instruction of the system controller 114, reads the display data from the buffer memory 110 at predetermined timings while temporarily storing the display data in the buffer memory 110, and performs display control on the display 109. Specifically, the display controller 111 of the embodiment generates display data for setting a destination at the time of generating the route guiding step which will be described later interlockingly with the operating unit 106, and performs the display control at the time of displaying the display data onto the display 109.

The details of the generation of display data and the display control in the display controller 111 in the embodiment will be described later.

The voice processing circuit 112 generates a voice signal on the basis of an instruction of the system controller 114, amplifies the generated voice signal via the speaker 113 and outputs, as a voice signal, information related to route guidance including the travel direction of the vehicle at the next intersection and traffic jam information or closed road information to be directly notified of the driver in travel guidance to the speaker 113.

Particularly, the voice processing circuit 112 generates information related to the route guidance at the time of generating a design guidance step which will be described later and at the time of route guidance, and outputs the generated information as a voice signal to the speaker 113.

The system controller 114 includes various input/output ports such as a GPS reception port, a key input port, and a display control port, and controls general functions for the navigation process in a centralized manner.

The system controller 114 controls the general operation of the navigation apparatus 100, reads a control program stored in the ROM/RAM 115, executes processes, and performs a control for route guidance including the route retrieving process and the route guiding process while temporarily storing data being processed in the ROM/RAM 115.

Particularly, the system controller 114 of the embodiment sets a destination that a mobile body such as a vehicle is to reach prior to the route guidance while controlling the components, executes creation of the route guiding step based on the set destination, and executes the route guidance based on the generated route guiding step.

The details of the process for generating the route guiding step (hereinbelow, called a route guiding step generating process) including the process for setting a destination (herein below, called a destination setting process) in the system controller 114 of the embodiment will be described later.

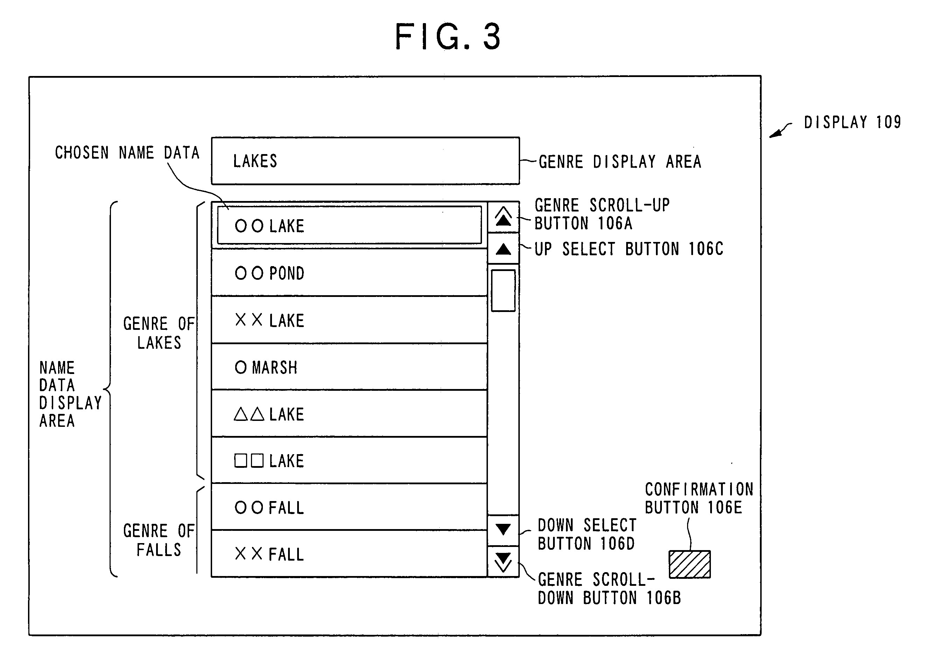

The display controller 111 of the embodiment will be described with reference to FIG. 3. FIG. 3 shows an example of display data which is generated by the display controller 111 of the embodiment and displayed on the display 109.

In the embodiment, the display controller 111 performs display control in the display 109 of map data or the like or contents information other than the map data as described above. In addition, at the time of generating the route guiding step to be described later, the display controller 111 generates display data for urging the user to set a destination or setting a destination interlockingly with the operating unit 106, and performs display control of the display 109 on the generated display data.

Concretely, at the time of generating the route guiding step which will be described later in response to an instruction of the user, the display controller 111 obtains genre information and name data stored in the map data storing unit 105. On the basis of the obtained genre information and name data, the display controller 111 generates display data of a list in which name data of destinations that the vehicle is to reach in accordance with the route guidance, is arranged genre by genre and in the same hierarchy level, and displays the generated display data on the display 109.

For example, in the embodiment, as shown in FIG. 3, the display controller 111 generates display data constructed by a name data display area in which name data to be selected is displayed in an array, and a genre display area indicative of the genre of the name data to be selected as a destination, that is, chosen as a destination which will be described later. The display controller 111 provides the generated display data with the genre scroll-up/scroll-down buttons 106A and 106B, select buttons 106C and 106D, and confirmation button 106E functioning as buttons for entering various commands interlockingly with the operating unit 106.

More specifically, in the embodiment, the display controller 111 generates display data including the genre scroll-up button 106A for scrolling the genre up one line, the up select button 106C for choosing the immediately preceding name data interlockingly with the operating unit 106, the genre scroll-down button 106B for scrolling the genre down one line interlockingly with the operating unit 106, and the down select button 106D for choosing the immediately subsequent name data interlockingly with the operating unit 106.

When an up category button is clicked interlockingly with the operating unit 106 in a state where any one piece of the name data is chosen, the display controller 111 displays the display data having, as a reference, name data listed at the head of the category to which the chosen name data belongs. When a down category button is clicked interlockingly with the operating unit 106, the display controller 111 displays the display data, having, as a reference, name data listed at the head of the category subsequent to the chosen name data.

In particular, in the embodiment, the display controller 111 always chooses one piece of name data, specifically, always makes one piece of name data flash or puts the cursor on one piece of name data. On the basis of a click on the up select button 106C or down select button 106D, the display controller 111 makes the name data flash or moves the cursor one by one.

When the confirmation button 106E provided for the operating unit 106 is clicked in a state where arbitrary name data is chosen, the system controller 114 determines the chosen name data as a destination to be set.

FIG. 3 shows display data displaying lake and fall genres and showing the case where OO lake is chosen. In this case, when the down select button 106D is clicked, the cursor moves to OO pond. When the genre scroll-down button 106B is clicked, the cursor moves to O fall, and the name data enters a chosen state.

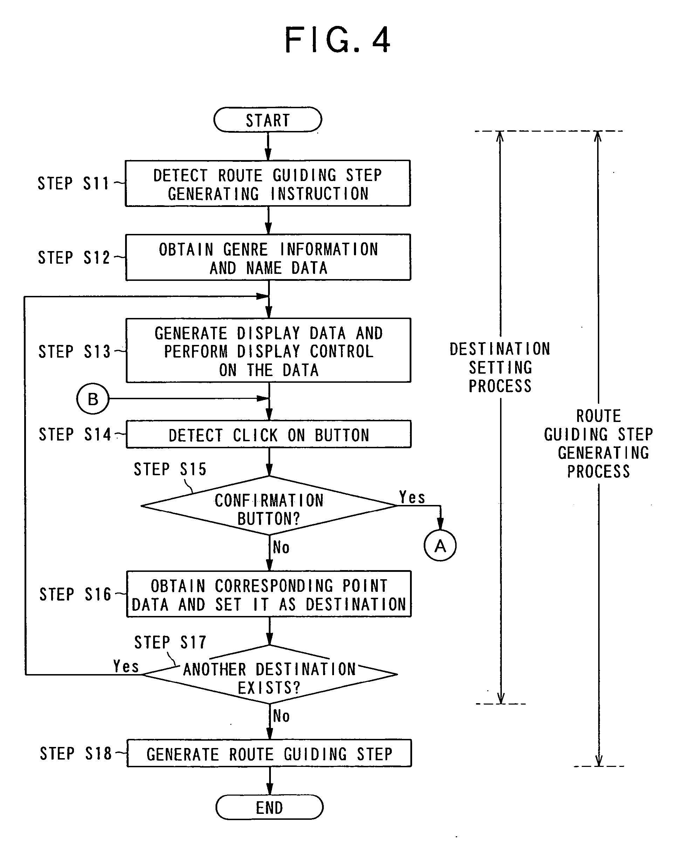

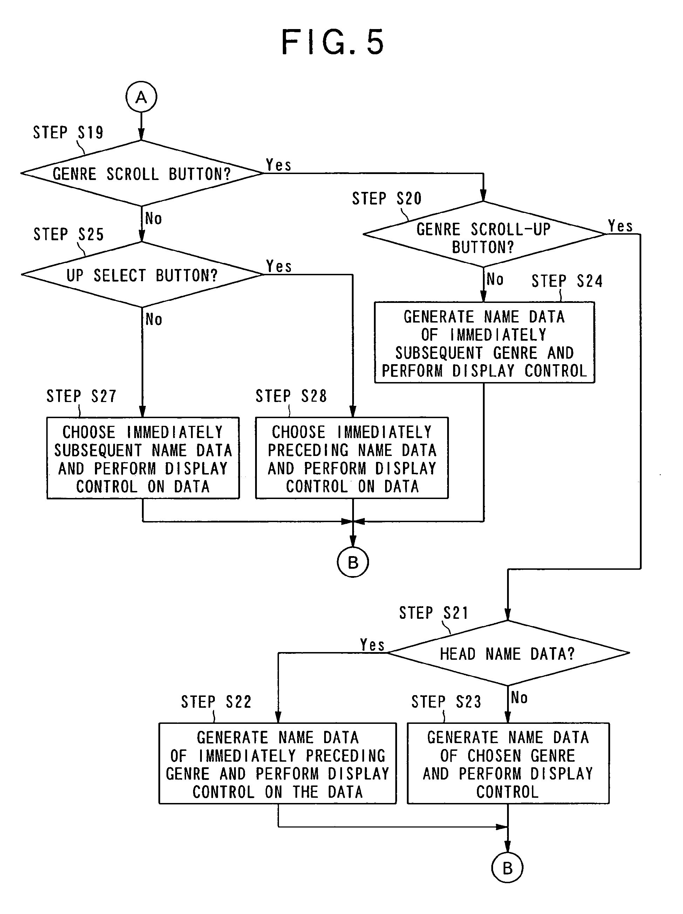

Next, the process of generating the route guiding step and the destination setting process of the embodiment will be described with reference to FIGS. 4 and 5. FIGS. 4 and 5 are flowcharts showing operations of the route guiding step setting process and the destination setting process in the system controller 114 of the embodiment.

First, an instruction of generating the route guiding step is entered by the user to the system controller 114 via the operating unit 106. When the system controller 114 detects the instruction (step S11), the system controller 114 allows the display controller 111 to obtain the name data and the genre information of the point data stored in the map data storing unit 105 (step S12).

Subsequently, the system controller 114 makes the display controller 111 generate display data in which name data is arranged in the same hierarchy level genre by genre on the basis of the name data and the genre information of the point data and execute the display control in the display 109, and waits for an input from the operating unit 106 (step S13).

In the input waiting state, the display controller 111 displays the generated display data on the display 109 under control of the system controller 114, and makes the display area of the display data in which the name data belonging to the genre at the head and which is listed at the head of the genre is disposed flash, or displays the cursor in the display area as a standard state (default).

Next, when any of the buttons provided for the operating unit 106 is clicked by the user and the click on the button is detected by the operating unit 106 (step S14), the system controller 114 determines whether or not the detected button is the confirmation button 106E for confirming the flashing name data or the name data on which the cursor exists as a destination (step S15).

In the case where the button detected by the system controller 114 is determined as a button for confirming the destination, the system controller 114 moves to the process in step S16. In the case where the detected button is not determined as a button for confirming the destination, the system controller 114 moves to the process in step S19.

Subsequently, when the system controller 114 determines that the detected button is the button for confirming the name data as a destination, the system controller 114 obtains point data in the flashing name data or the name data on which the cursor exists from the map data storing unit 105, and sets the obtains map data as a destination (step S16).

After the presence or absence of setting of another destination is detected (step S17), the system controller 114 generates a route guiding step on the basis of the set destination, and stores the generated route guiding step as route guiding step data into the ROM/RAM 115 (step S18).

At the time of setting another destination, the system controller 114 controls the display controller 111 to generate display data asking whether another destination is set or not and execute display control on the display data, and detects the presence or absence of setting of another destination on the basis of an operation of the operating unit 106. In the case where the system controller 114 detects an instruction for setting another destination, the system controller 114 stores the data of the set destination into the ROM/RAM 115, and moves to the process in step S13.

Further, in the case where the system controller 114 detects that setting of another destination is not made, and generates the route guiding step data, on condition that the system controller 114 stores the route guiding step data into the ROM/RAM 115 and, after that, route guidance starts via the operating unit 106, the system controller 114 starts route guidance on the basis of the route guiding step data stored in the ROM/RAM 115.

On the other hand, when the system controller 114 determines that the detected button is not the button for confirming the data as the destination, the system controller 114 determines whether the detected button is the genre scroll-up/scroll-down button 106A or 106B or not (step S19). In the case where the detected button is determined as the genre scroll-up/scroll-down button 106A or 106B, whether the detected button is the scroll-up button 106A or not is determined (step S20). If NO, the system controller 114 moves to step S25.

When the system controller 114 determines that the detected button is the genre scroll-up button 106A, the system controller 114 determines whether the chosen name data is name data positioned at the head of the genre of the chosen name data or not (step S21).

In the case where the system controller 114 determines that the chosen name data is the name data positioned at the head of the genre, the system controller 114 makes the display controller 111 generate display data for displaying name data of the genre (hereinbelow, called immediately preceding genre) immediately preceding the genre to which the chosen name data belongs and execute display control in the display 109, waits for an input from the operating unit 106, and moves to the process of step S14 (step S22) . In the case where the system controller 114 determines that the chosen name data is not name data positioned at the head of the genre, the system controller 114 allows display data for displaying name data having, as a reference, the name data positioned at the head of the genre to which the chosen name data belongs (hereinbelow, called chosen genre) to be generated, allows the display control in the display 109 to be executed, waits for an input from the operating unit 106, and moves to the process of step S14 (step S23).

In the case of displaying the name data of the immediately preceding genre, the display controller 111 makes name data positioned at the head of the immediately preceding genre flash or moves the cursor onto the name data, and displays, on the display 109, the display data in which the name data is flashing or the cursor is moved on the name data. In this case, when the immediately preceding genre is selected in a state where the genre at the top is selected, display data for displaying name data having, as a reference, name data in the genre positioned at the end is generated, and the display control in the display 109 is executed.

In the case of displaying the name data in the chosen genre, the display controller 111 makes the name data positioned at the head of the chosen genre flash or moves the cursor onto the name data, and displays the display data in which the name data is flashing or the cursor is moved on the name data on the display 109.

On the other hand, when the system controller 114 determines that the detected button is not the genre scroll-up button 106A but is the genre scroll-down button 106B, the system controller 114 makes the display controller 111 generate display data for displaying name data of the genre (hereinbelow, called immediately subsequent genre) immediately subsequent to the genre to which the chosen name data belongs and execute display control in the display 109, waits for an input from the operating unit 106, and moves to the process of step S14 (step S24).

In this case, the display controller 111 makes name data positioned at the head of the immediately subsequent genre flash or moves the cursor onto the name data, and displays, on the display 109, the display data in which the name data is flashing or the cursor is moved on the name data.

When it is determined that in step S18 that the detected button is not the genre scroll-up/scroll-down buttons 106A and 106B but is the select button 106C or 106D, whether the detected button is the up select button 106C or not is determined (step S25).

In the case where the system controller 114 determines that the detected button is the up select button 106C, the system controller 114 allows display data for choosing name data (hereinbelow, called immediately preceding data) immediately preceding the chosen name data to be generated, allows the display control in the display 109 to be executed, waits for an input from the operating unit 106, and moves to the process in step S14 (step S26).

In this case, the display controller 111 makes the immediately preceding name data flash or moves the cursor onto the immediately preceding name data, and displays display data in which the name data is flashing or the cursor is moved on the name data on the display 109.

On the other hand, when the system controller 114 determines that the detected button is not the up select button 106C but is the down select button 106D, the system controller 114 makes the display controller 111 generate display data for displaying name data (hereinbelow, called immediately subsequent name data) immediately subsequent to the chosen name data and execute display control in the display 109, waits for an input from the operating unit 106, and moves to the process of step S14 (step S27).

In this case, in a manner similar to the case of the immediately preceding name data, the display controller 111 makes the immediately preceding name data flash or moves the cursor onto the immediately preceding name data and displays, on the display 109, the display data in which the name data is flashing or the cursor is moved on the name data.

As described above, in the navigation apparatus 100 of the embodiment for allowing the user to select at least one piece of point data from a plurality of pieces of point data to be selected by the user, which is stored in the map data storing unit 105, thereby obtaining the point data, when each point data is stored so as to be associated with the genre information indicative of the attribute of the point data and name data indicative of the name of the point data, the apparatus includes: the display controller 111 for obtaining the name data and genre information of each point data from the map data storing unit 105, generating display data for displaying the names of the point data, which are arranged in the same hierarchical level by the genre information on the basis of the obtained name data and genre information, and displaying the generated display data on the display 109; and the operating unit 106 used for selecting the genre to which the point data to be selected by the user belongs and used for selecting name of one pieces of point data from the selected genre.

With the configuration, the navigation apparatus 100 of the embodiment generates display data for displaying name information of the point data arranged in the same hierarchical level by genre information on the basis of the obtained genre information.

Therefore, the visibility for users at the time of allowing the user to select a point as a destination from name data divided by genre can be improved, so that the user can set a destination easily and accurately.

The navigation apparatus 100 of the embodiment has the configuration that, on the basis of the name of point data selected with the display controller 111 and the operating unit 106, point data having the name is obtained from the map data storing unit 105. Interlockingly with the selecting operation executed by using the operating unit 106, generation of display data for displaying the genre selected with the operating unit 106 and display control on the display data is performed. Interlockingly with the selecting operation executed by using the operating unit 106, generation of display data at the time of selection of the name of point data by the operating unit 106 and display control on the display data is performed.

With the configuration, the navigation apparatus 100 of the embodiment generates display data for displaying the names of the point data, which are arranged in the same hierarchical level by the genre information on the basis of the obtained name data and genre information, and displays the generated display data on the display 109. When a genre to which point data to be selected by the user belongs is selected and the name of one piece of point data is selected from the selected genre, interlockingly with the selecting operation executed by using the operating unit 106, generation of display data for displaying the genre selected with the operating unit 106 and display control on the display data is performed, and generation of display data at the time of selection of the name of the point data by the operating unit 106 and the display control on the display data is performed.

Therefore, a point as a destination can be selected from the name data divided by genre and, also in the case of retrieving a point belonging to another genre, the search can be executed easily. As a result, one piece of data can be easily and promptly selected from a plurality of pieces of data, and the operability and the visibility in operations for users can be improved.

The navigation apparatus 100 of the embodiment has a configuration that the operating unit 106 includes: the select buttons 106C and 106D each used for choosing a name of point data in order on the basis of a name of point data in a genre displayed in the display data; and the confirmation button 106E for confirming the chosen name of the point data as the name of point data to be selected.

With the configuration, the navigation apparatus 100 of the embodiment can select point data piece by piece and therefore can select one point as a destination from the name data divided by genre. Thus, one piece of data can e easily and promptly selected from a plurality of pieces of data, and the operability and the visibility in operations for users can be improved.

In the navigation apparatus 100 of the embodiment, in the case where the operating unit 106 switches selection to another genre arranged preceding or subsequent to the presently shown genre, the operating unit 106 has the genre scroll-up button 106A for selecting the immediately preceding genre, and the genre scroll-down button 106B for selecting the immediately subsequent genre.

With the configuration, the navigation apparatus 100 of the embodiment can easily retrieve a point belonging to another genre, so that one piece of data can be easily and promptly selected from a plurality of pieces of data. Thus, the operability and the visibility in operations for users can be improved.

In the navigation apparatus 100 of the embodiment, the operating unit 106 has: the select buttons 106C and 106D used for choosing a name of point data one by one in order on-the basis of the name of point data in a genre displayed in display data; and the confirmation button 106E used for confirming the chosen name of the point data as the name of point data to be selected. In the case where the name of point data at the head of an arbitrary genre is chosen with the select buttons 106C and 106D and the immediately preceding genre information is selected with the genre scroll-up button 106A, the display controller 111 displays display data on selection of the immediately preceding genre information on the display 109. In the case where the name of another data different from the point data at the head is chosen and the immediately preceding genre information is selected with the genre scroll-up button 106A, display data having, as a reference, the name of the point data at the head is displayed on the display 109.

With the configuration, the navigation apparatus 100 of the embodiment displays display data at the time of selection of the immediately preceding genre information and, in the case where the name of another data different from the point data at the head is chosen and the immediately preceding genre information is selected with the genre scroll-up button 106A, displays display data having, as a reference, the name of the point data at the head on the display 109.

Therefore, a point as a destination can be selected from name data divided by genre. Also in the case of retrieving a point belonging to another genre, the search can be executed easily. As a result, a piece of data can be easily and promptly selected from a plurality of pieces of data, and the operability and the visibility in operations for users can be improved.

In the navigation apparatus 100 of the embodiment, the operating unit 106 has: the select buttons 106C and 106D used for choosing a name of point data one by one in order on the basis of the name of point data in a genre displayed in display data; and the confirmation button 106E used for confirming the chosen name of the point data as the name of point data to be selected. In the case where the name of arbitrary point data in an arbitrary genre is chosen with the select buttons 106C and 106D and the immediately subsequent genre information is selected with the genre scroll-down button 106B, the display controller 111 displays display data on selection of the immediately subsequent genre information on the display 109.

With the configuration, in the case where the name of arbitrary point data in an arbitrary genre is chosen with the select buttons 106C and 106D and the immediately subsequent genre information is selected with the genre scroll-down button 106B, the navigation apparatus 100 of the embodiment displays, on the display 109, display data used when the immediately subsequent genre information is selected.

Therefore, a point as a destination can be selected from name data divided by genre. Also in the case of retrieving a point belonging to another genre, the search can be executed easily. As a result, a piece of data can be easily and promptly selected from a plurality of pieces of data, and the operability and the visibility in operations for users can be improved.

The navigation apparatus 100 of the embodiment has a configuration that, when a genre is selected with the operating unit 106, the display controller 111 generates display data having the attribute name of the genre information being selected, and performs the display control.

With the configuration, the navigation apparatus 100 of the embodiment generates display data having an attribute name of genre information and performs the display control on the display data, so that the genre of target point data to be selected can be set easily. Thus, one piece of data can be easily and promptly selected from a plurality of pieces of data. The operability and the visibility in operations for users can be improved.

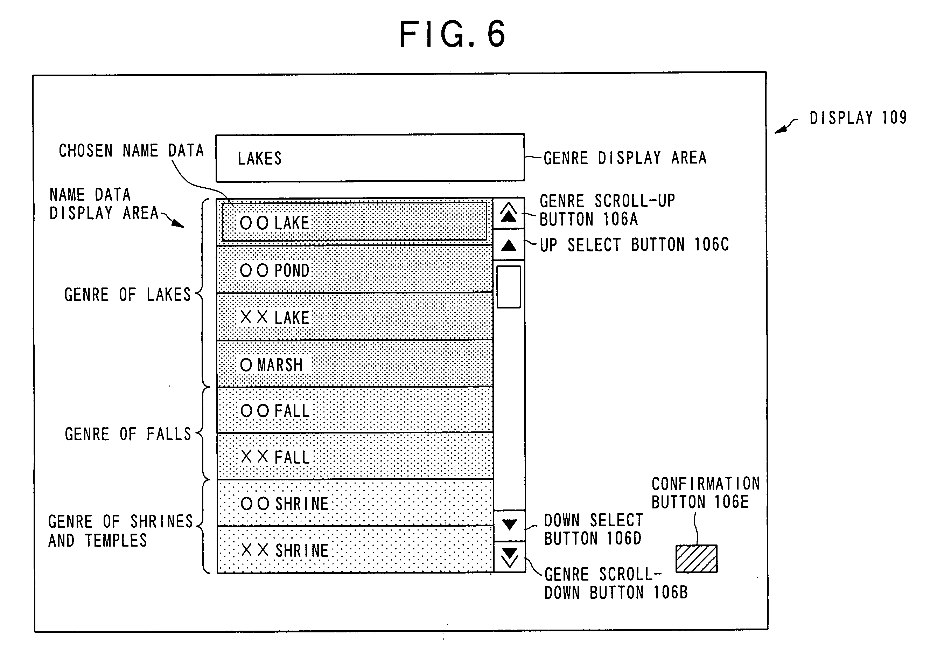

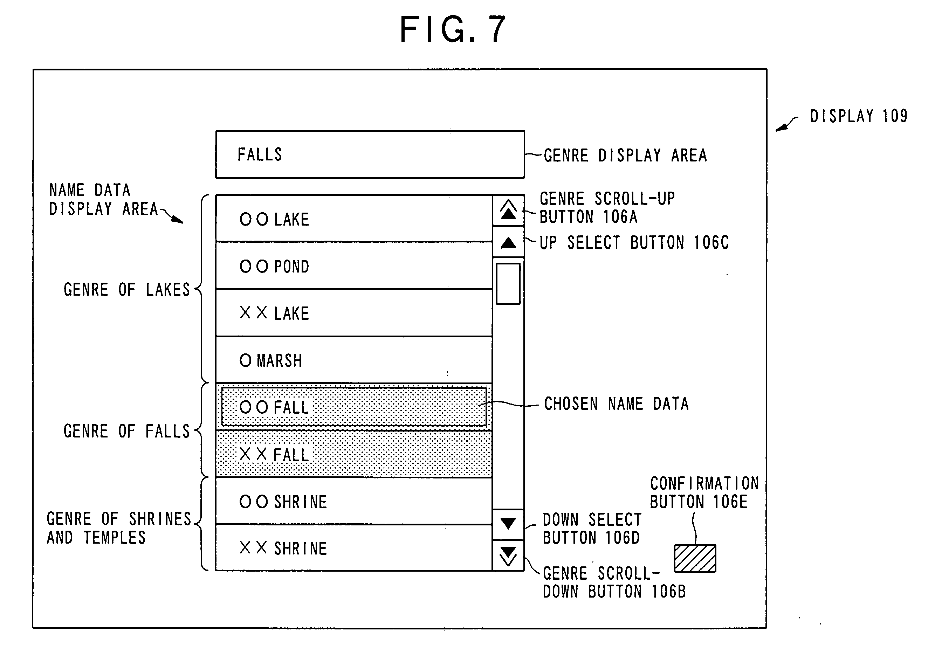

In the embodiment, the display controller 111 performs generation of name data and display control on the genre unit basis, at the same hierarchical level. Alternatively, as shown in FIG. 6 for example, generation of display data having name data on which different colors according to genres are superimposed, and the display control may be performed.
Specifically, in the navigation apparatus 100 of the embodiment, when a genre is selected with the operating unit 106, the display controller 111 may generate display data in which the selected genre and other genres are distinguished from one another in different colors and performs the display control. Alternatively, as shown in FIG. 7 for example, the display controller 111 may generate display data in which a color is superimposed on only the genre to which the chosen name data belongs or display data in which a special color is superimposed on only the genre to which the chosen name data belongs.

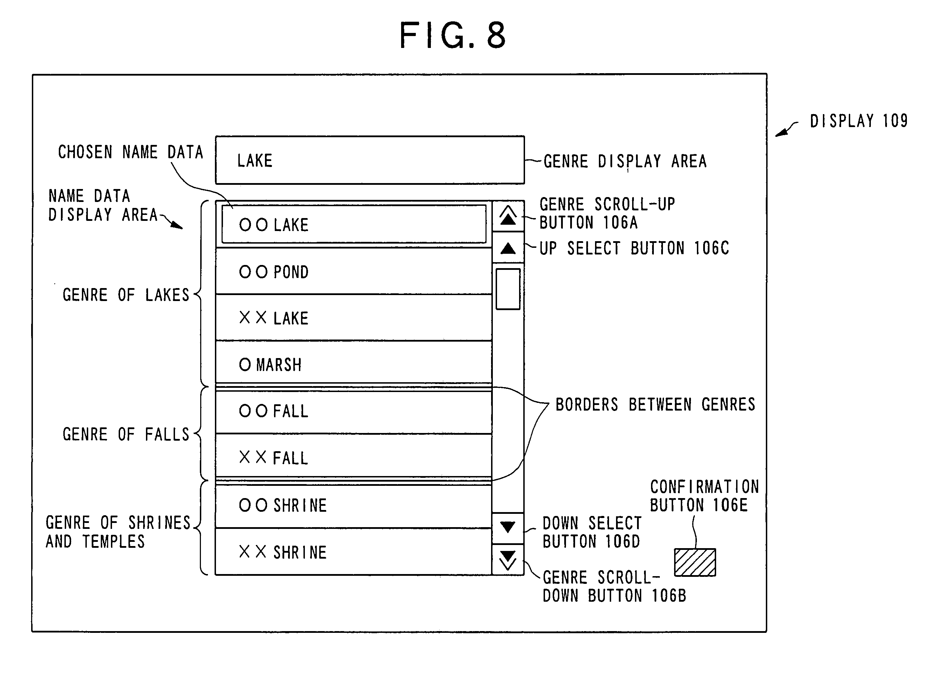

Although the display controller 111 generates name data at the same hierarchical level on the genre unit basis and performs the display control in the foregoing embodiment, for example, as shown in FIG. 8, the display controller 111 may generate display data having name data on which borders with other genres are superimposed on the genre unit basis ad perform the display control. Specifically, in the navigation apparatus 100 of the embodiment, when a genre is selected with the operating unit 106, the display controller 111 may generate at least one of the above-described display data in which border information indicative of borders between the selected genre with other genres is superimposed and perform the display control.

In the embodiment, display data for displaying name data of a point to be set as a destination is generated on the basis of point data stored in the map data storing unit 105, and the display control on the display data is performed. In a destination setting process, display data with respect to all of destinations stored in the map data storing unit 105 or display data with respect to destinations in a region which is pre-set by the user may be generated and display control on the display data may be performed.

Although the display controller 111 generates display data at only one hierarchical level for displaying name data arranged genre by genre in the foregoing embodiment, the display controller 111 may generate display data having a plurality of hierarchical levels and arranged at the end hierarchical level on the genre unit basis. Specifically, when there are a plurality of kinds of genre information in the navigation apparatus 100 of the embodiment, the display controller 111 may generate display data for displaying names of point data arranged at the same hierarchical level by the kind of genre information or by genre information on the basis of the obtained name data and genre information, and perform the display control on the display data.

To be concrete, in the case where the number of the hierarchical levels is "2" and name data is classified into large categories and small categories, display data for displaying name data of small categories which belong to a large category may be generated on the large category unit basis.

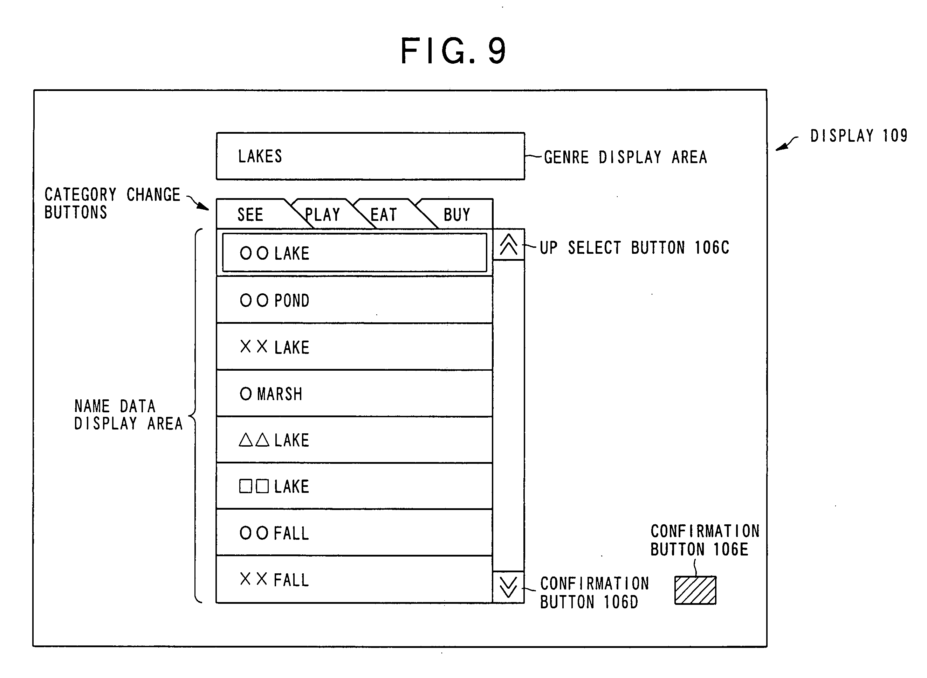

For example, in this case, as shown in FIG. 9, the display controller 111 may generate display data for displaying name data for each of categories indicative of actions of "see", "play", "eat", and "buy" as large categories.

In this case, the genre of the large category of "see" includes lakes and falls. By switching the area for displaying the large categories interlockingly with the operating unit 106, other large categories can be displayed.

In the case where the display controller 111 generates display data for generating name data and there is no space for the genre scroll-up/scroll-down buttons 106A and 106B, the display controller 111 may use another button which also serves as the genre scroll-up/scroll-down buttons 106A and 106B. Specifically, in the case where the operating unit 106 is constructed only by single selecting means for selecting genres in the navigation apparatus 100 of the embodiment, the operating unit 106 used for designating the kind of genre information is further provided. In the case where the display controller 111 operates interlockingly with the designating operation executed with the operating unit 106, arbitrary genre information is designated, and the designated genre information is further designated by the operating unit 106, the presently displayed genre may be switched to another genre and display data displaying the name of point data may be generated and the display control on the display data may be performed.

For example, in the embodiment, as shown in FIG. 9, the display area for displaying the large categories may be assigned to category change buttons with which the genre in the large category may be changed. In this case, since there is only one display area, the area is assigned as a category down-scroll button. For example, in this case, the display area for displaying the large categories corresponds to designating means of the invention.

In the embodiment, the route guiding step generating process including the destination setting process is performed by the navigation apparatus 100. It is also possible to provide the navigation apparatus 100 having the information recording medium for storing the point data and map data with a computer and a recording medium, store a program for executing the route guiding step generating process onto the recording medium, read the program by the computer, and perform a route guiding step generating process similar to the above.

In the foregoing embodiment, point data is used for setting a destination in the navigation apparatus 100. The invention, however, is not limited to the use. The point data can be also used for setting the present position or retrieving other points.

In the embodiment, the data selecting apparatus according to the invention has been described by using setting of a destination based on point data in the navigation apparatus 100. The invention is not limited to the above. The invention can be applied to a data selecting apparatus for selecting one piece of data in a communication terminal device such as a cellular phone or a personal computer.

In the embodiment, the display controller 111 generates display data in a list in which name data of destinations is arranged at the same hierarchical level on the genre unit basis at the time of setting a destination that the vehicle is to reach by the route guidance. It is also possible to change the display order of genres on the basis of the priority of genres.
Specifically, for example, genres shown in FIG. 6 may be displayed in order from high priority.

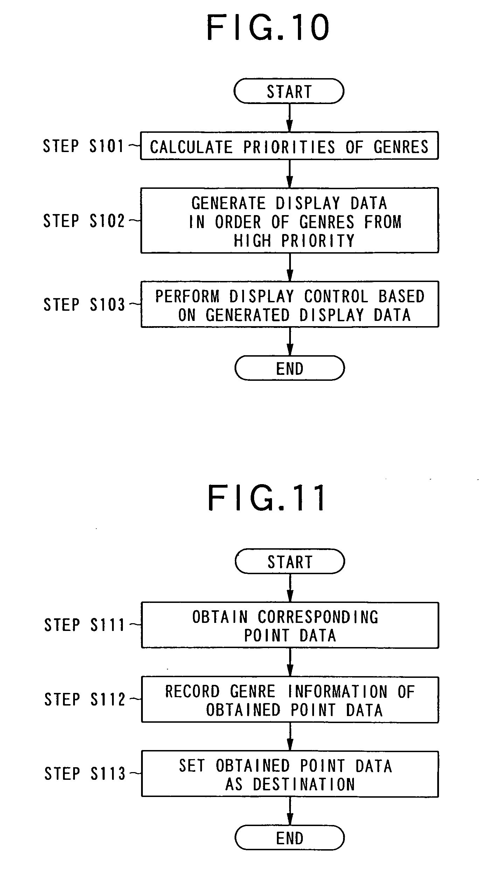

In this case, in step S13 in the destination setting process of FIG. 4, a process of displaying name data genre by genre on the basis of the priority shown in FIG. 10 is performed. To be specific, the system controller 114 calculates the priority of each genre by a predetermined calculating method at the time of giving instruction to the display controller 111 (step S101) and makes the display controller 111 generate display data in order of genres from the high priority (step S102). When display data is generated in step S102, the display controller 111 performs the display control on he display 109 on the basis of the generated display data in order to display the generated display data on the display 109 (step S103).

For example, in the embodiment, the system controller 114 calculates priorities by computing scores or the like on the basis of point priority used in a second embodiment which will be described later, on the basis of data when destinations were selected by the user in the past, or on the basis of a predetermined parameter such as a parameter which is pre-set by the user, a hobby of the user, weather of a place to be set as a destination, date of arrival at a destination, and an accompanying person who accompanies the user to the destination, and the like. Consequently, in the embodiment, in step S16 in the destination setting process in FIG. 4, the system controller 114 performs a process of setting corresponding point data shown in FIG. 11 as a destination. To be specific, when the corresponding point data is obtained from the map data storing unit 105 (step S111), the genre information of the obtained point data is used as information for calculating the priority of each genre in the above-described step S101 into a priority calculating area provided in the RAM/ROM 115 (step S112), and the obtained point data is set as a destination (step S113).

### Second Embodiment

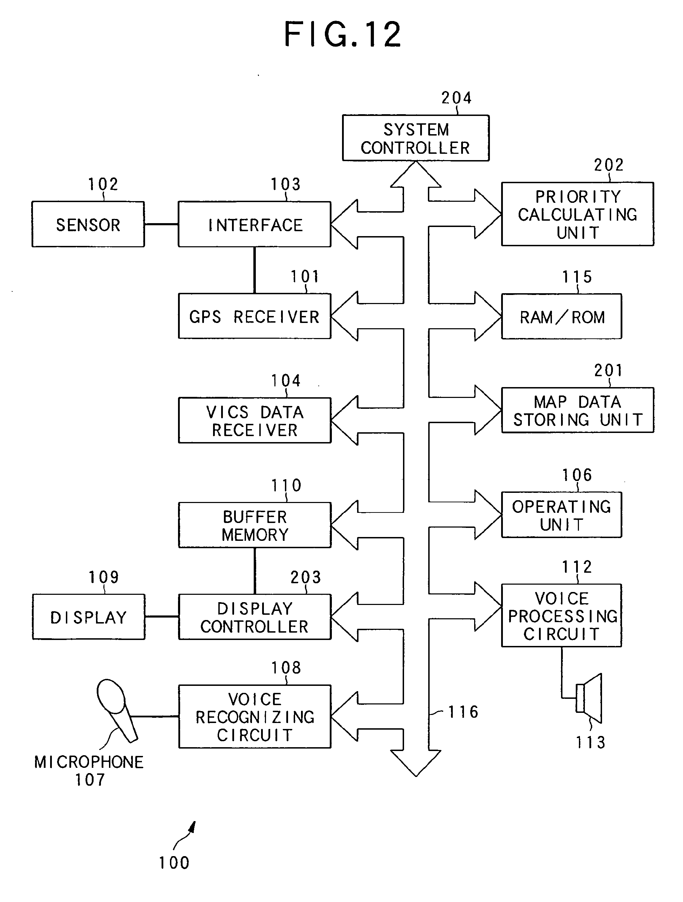

A second embodiment of the navigation apparatus according to the present invention will now be described with reference to FIGS. 12 to 20.

The second embodiment is characterized by a point such that, at the time of performing the destination setting process in the first embodiment, point priority in each point data stored in the map data storing unit 105 is calculated by using predetermined data, display data in which name data of points having high priority is arranged separately from the name data by genre is generated, and the display control is performed on the display data. Since the other configuration is similar to that of the first embodiment, the same reference numerals are designated to the same members, and their description will not be repeated.

To be concrete, at the time of generating display data for displaying name data for setting a destination, the navigation apparatus of the second embodiment calculates priority of a point indicated by point data on the basis of preset table data which will be described later and point data. The navigation apparatus regards a point having predetermined priority as a point to be set more preferentially than other points, and generates display data for displaying name data of the other points.

An operating part of the second embodiment is used for entering a parameter of a destination that the user wishes to visit at the time of calculating priority in each point data.

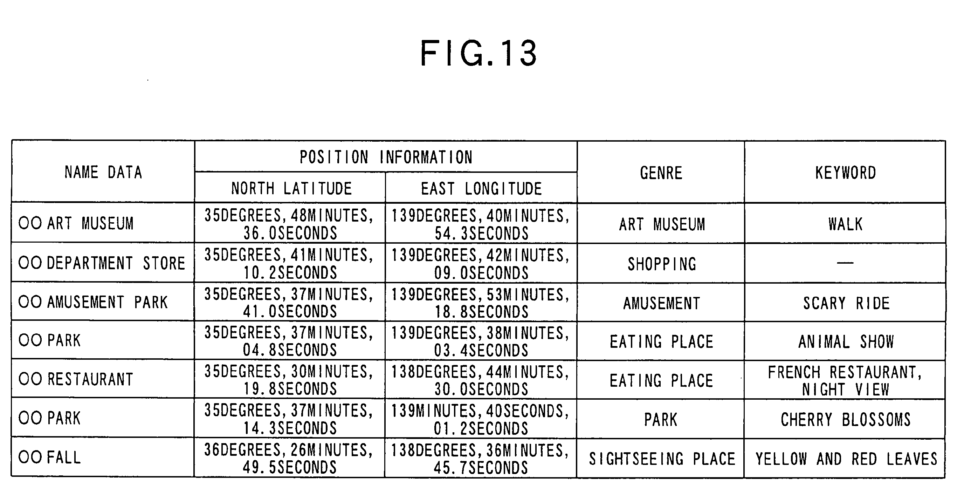

First, the general configuration and outline operation of the navigation apparatus in the second embodiment will be described with reference to FIGS. 12 and 13. FIG. 12 is a block diagram showing a schematic configuration of the navigation apparatus of the second embodiment according to the invention. FIG. 13 shows an example of a data configuration of point data stored in the map data storing unit 105 of the second embodiment.

A navigation apparatus 200 of the second embodiment has, as shown in FIG. 12, the GPS receiver 101, the sensor 102, the interface 103, the VICS data receiver 104, a map data storing unit 201 in which map data and point data including information for calculating priority is preliminarily recorded, the operating unit 106, the microphone 107, the voice recognizing circuit 108, a priority calculating unit 202 for calculating priority at each of points on the basis of the point data and parameters for setting a destination entered by the operating unit 106, a display controller 203 for generating display data for displaying name based on the genre and priority and performing the display control, the speaker 113, a system controller 204 for performing controls on route search, generation of a route guiding step, step management in the route guidance, ad calculation of priority, and executing control on the whole system with respect to the route guidance, and the ROM/RAM 115. The system controller 204 and the components are connected to each other via the bus 117.

For example, the map data storing unit 201 of the embodiment corresponds to storing means in the invention. The priority calculating unit 202 corresponds to calculating means of the invention. For example, the display controller 203 of the embodiment corresponds to first obtaining means, display controlling means, and second obtaining means. The system controller 204 corresponds to display controlling means and calculating means of the invention.

In the map data storing unit 201 of the second embodiment, as point data, not only name data such as the names of facilities, places, and the like, genre information, and position information but also keywords which are used at the time of calculating priority to be described later and can be characteristic points of points as destinations are set as keyword information.

For example, in the second embodiment, as shown in FIG. 13, key words are set for point data in the map data storing unit 201, such as "cherry blossoms" as a keyword showing that a destination is famous for cherry blossoms, "red and yellow leaves" as a keyword showing that a destination is famous for leaves which turn red and yellow, "animal entertainment" showing that a destination has a place where an animal show is held, "walk" indicating that there is a walking path in a destination, and "night view" indicating there is a place famous for beautiful night view in a destination.

The priority calculating unit 202 calculates point priority in each point data stored in the map data storing unit 105 on the basis of the map data and a parameter for setting a destination which is entered by the operating unit 106, extracts a point corresponding to the preset parameter on the basis of the calculated priority, and outputs the information of the extracted point as priority information to the display controller 203 via the system controller 204.

Concretely, the priority calculating unit 202 calculates priority indicating a point having high priority to visit a destination matching the preference of the user on the basis of a setting parameter (hereinbelow, called destination parameter) for setting a destination of the user entered via the operating unit 106 and stored table data. The priority calculating unit 202 extracts a point corresponding to the preset parameter on the basis of the calculated priority, and outputs the name data of the extracted point and, as priority information, information for preferentially displaying the display data to the display controller 203 via the system controller 204.

The details of the priority calculating unit 202 and the table data in the embodiment will be described later.

To the display controller 203, in a manner similar to the first embodiment, map data or the like entered via the system controller 204 is entered. The display controller 203 generates display data to be displayed on the display 109 as described above on the basis of an instruction of the system controller 204, while temporarily storing the display data into the buffer memory 110, reads the display data from the buffer memory 110 at a predetermined timing, and performs the display control of the display 109.

To the display controller 203, different from the first embodiment, name data and genre information stored in the map data storing unit 105 and the priority information of each of points calculated in the priority calculating unit 202 is input. The display controller 203 generates display data for displaying name data of each point on the basis of the name data, the genre information, and the priority information under control of the system controller 204, and performs the display control in the display 109 on the generated display data.

The details of generation of display data and the display control in the display controller 203 of the second embodiment will be described later.

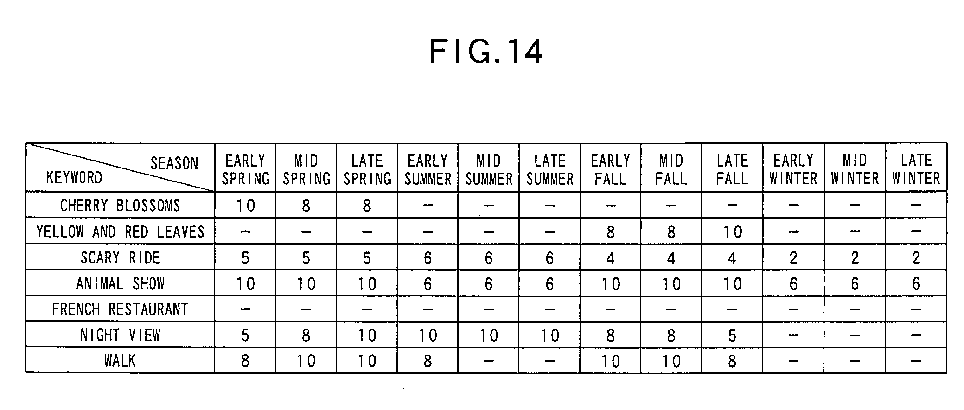

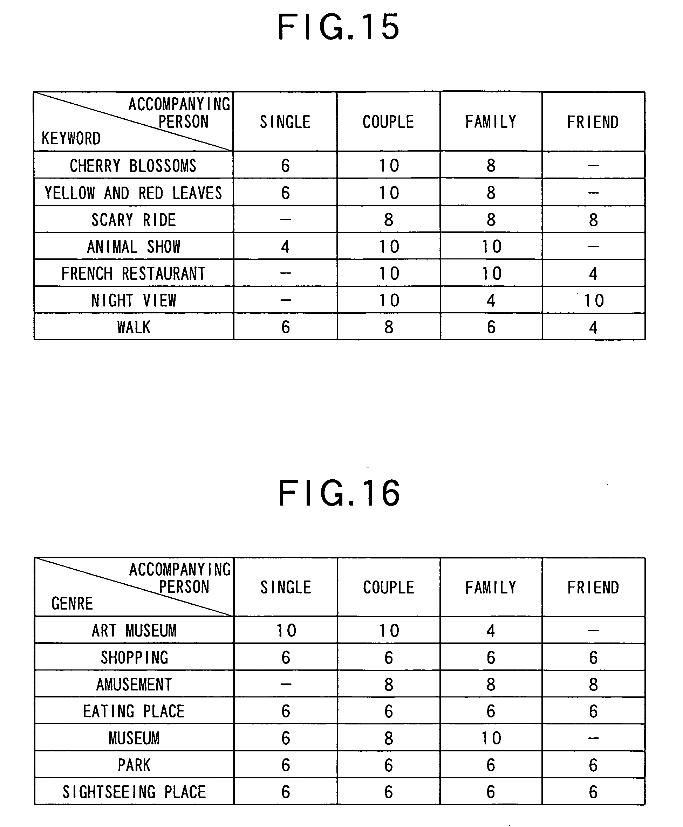

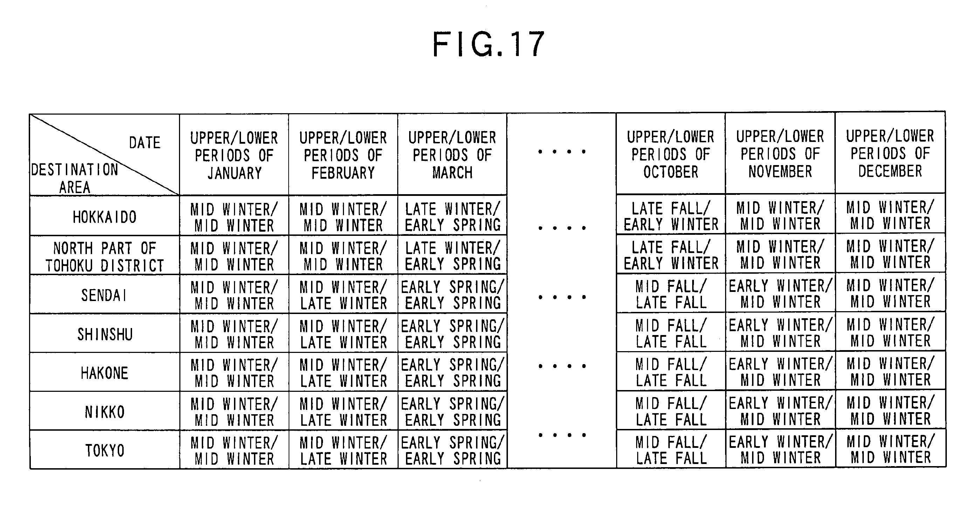

Next, with reference to FIGS. 14 to 17, the priority calculating unit 202 of the second embodiment and the table data used at the time of calculating the priority will be described. FIGS. 14 and 15 show an example of the configuration of keyword table data of the second embodiment. FIG. 16 shows an example of the data configuration of genre table data of the second embodiment. FIG. 17 shows an example of the data configuration of a season data table of the second embodiment.

The priority calculating unit 202 calculates the priority indicating that a destination matching the preference of the user as a point having high priority to visit on the basis of a setting parameter (hereinbelow, called destination parameter) for setting a destination of the user entered via the operating unit 106 and the stored table data, and outputs the calculated priority to the display controller 203 via the system controller 204.

Concretely, in the case where destination parameters such as departure date, an accompanying person, and an area in which a destination to visit exists (hereinbelow, called destination area) are entered via the operating unit 106, the priority calculating unit 202 of the embodiment calculates the priority for each of destinations in the stored destination area by referring to the table data on the basis of the destination parameters.

In the priority calculating unit 202, to calculate priority of each of point data, the following table data is stored: table data in which a destination parameter entered via the operating unit 106 and a keyword are associated with each other and which is used for calculating priority of a destination (hereinbelow, called keyword table data) ; table data in which genre information and a parameter for the user to visit a destination (hereinbelow, called destination parameter) are associated with each other and which is used for calculating priority of the destination together with the keyword table data; and season specifying table data for specifying a season of visit.

Each of the keyword table data, genre table data, and season specifying table data will now be described.

The keyword table data is constructed by, as shown in FIGS. 14 and 15, table data in which priorities are assigned in matrix based on all of keyword information given to the point data of the destinations and destination parameters which are set by the destination parameters registered via the operating unit 106.

In the second embodiment, for example, in the keyword table data, as shown in FIGS. 14 and 15, the seasons of the destination area to visit or an accompanying person are set as destination parameters. A plurality of kinds are given for each destination parameter.

Concretely, as shown in FIG. 14, the destination parameters with respect to seasons (hereinbelow, called season parameters) are set in 12 kinds obtained by dividing each of four seasons into three periods of early, mid, and late periods. As shown in FIG. 15, as the accompanying person parameters, items of "single", "couple", "friend(s)", and "family" are set. "Single" indicates that there is no accompanying person. "Couple" indicates that only his/her girl (boy) friend or spouse accompanies. "Friend" indicates that his/her friend(s) accompany. "Family" indicates that his/her parent (s) or child (children) accompany.

In the second embodiment, the destination parameters entered via the operating unit 106 are used except for the destination parameters indicative of seasons which will be described later. For each of the priorities, a numerical value having a preset level is used.

The genre table data is constructed by table data in which priorities are assigned in matrix based on genre information indicative of genres of destinations grouped by interest, and destination parameters which are set by the destination parameters.

In the second embodiment, in the genre table data, as shown in FIG. 16, for example, genres are set as genre information such as eating places, shops except for eating places, amusement places including amusement parks and game watching places like stadiums, seeing places like art museum and museums, and tourist places like sightseeing sites. In the second embodiment, the destination parameters and the number of times data are set in a manner similar to those of the keyword table data.

In the season table data, as shown in FIG. 17, total 12 months from January to December each divided in upper and lower parts are set for each destination area registered by the user. To the months, the above-described total 12 periods of early, mid, and late periods of four seasons are assigned. In the embodiment, at the time of generating display data, the seasonal information of the destination area is set on the basis of departure time registered by the user, concretely, departure date.

As described above, the priority calculating unit 202 calculates priority for each of destinations in the stored destination areas with reference to the table data on the basis of the preliminarily registered table data and the destination parameters set by the user such as the departure date, accompanying person (s), and destination area via the operating unit 106.

In particular, in the second embodiment, the priority calculating unit 202 determines a season including departure date in the season table data and, on the basis of the determined season and the destination area, sets the season in the departure date in the destination area.

With the keyword table data, the priority calculating unit 202 obtains the destination parameters and keyword information of the set season and the registered accompanying person and, on the basis of the priority of each keyword obtained and the keyword information of each of destinations existing in the registered destination area, calculates the priorities of the destinations.

More specifically, on the basis of the priorities of the keywords obtained, the priority calculating unit 202 determines whether or not the keywords exist in the keyword information of all of the destinations in the destination area stored in the map data storing unit 201. In the case where the presence of any keyword is detected, the priority of the keyword obtained from the keyword table data is added to the destination on the destination parameter unit basis, and the total priority in each of the destinations is calculated.

In the case where a plurality of keywords are set as attribute information in the point data of each of the destinations stored in the map data storing unit 201, only one maximum priority is added for each destination parameter.

Further, the priority calculating unit 202 also obtains the priority of the genre information in the destination parameter of the registered accompanying person by using the genre table data. The priority calculating unit 202 calculates, on the basis of the obtained genre information and the genre information included in the point data of each of destinations existing in the registered destination area, the priority of each of the destinations, and adds the calculated priority to the priority of each of the destinations calculated on the basis of the keyword information.

Further, the priority calculating unit 202 chooses destinations having predetermined priority on the basis of the calculated priority of each of the destinations and outputs a message that the chosen destinations are to be preferentially displayed in descending order of the priorities to the display controller 203.

For example, the priority calculating unit 202 of the second embodiment chooses points as top 50 destinations in priorities and outputs, as priority information, the name data of the chosen point data and its rank information to the display controller 203.

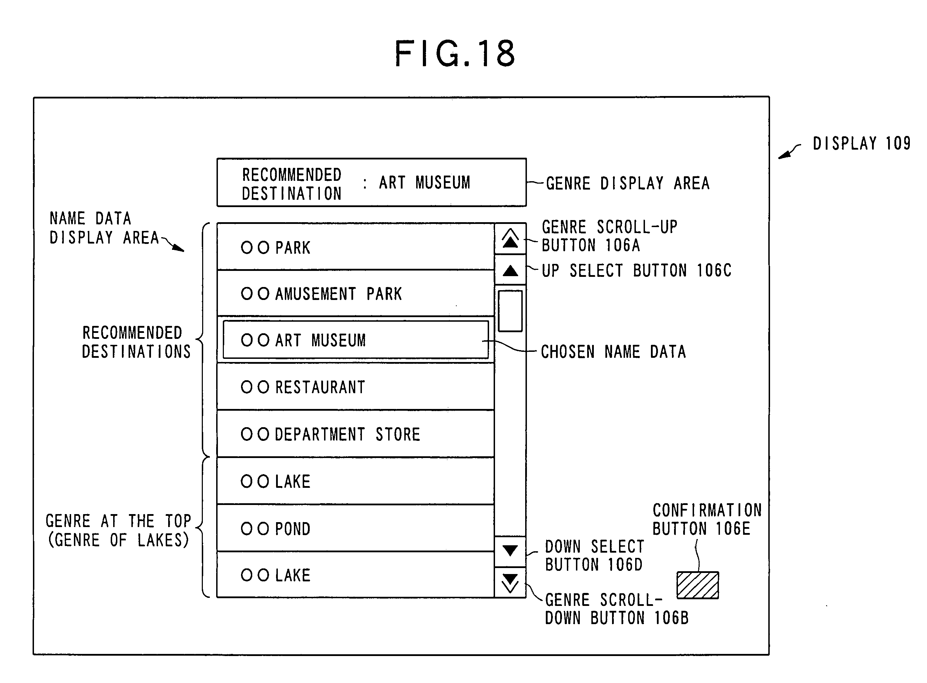

Next, the display controller 203 of the second embodiment will be described with reference to FIG. 18. FIG. 18 shows an example of display data which is generated by the display controller 203 of the embodiment and is displayed on the display 109.

The display controller 203 of the embodiment generates, at the time of generating the route guiding step interlockingly with the operating unit 106, display data for displaying corresponding name data independently of the genres on the basis of the priority information calculated by the priority calculating unit 202, and performs display control for displaying the display data on the display 109.

Concretely, at the time of generating a route guiding step to be described later in response to an instruction of the user, the display controller 203 obtains genre information and name data stored in the map data storing unit 105 and priority information showing the name data and priority which is output from the priority calculating unit 202. The display controller 203 generates a list of display data in which the name data shown as the priority information is arranged in accordance with the priorities, and name data which does not correspond to the priority information is arranged genre by genre at the same hierarchical level so as to be subsequent to the name data shown as the priority information.

For example, in the second embodiment, the display controller 203 generates display data constructed by, as shown in FIG. 18, a genre display area, a name data display area including a part showing recommended destinations in which name data arranged in accordance with the priorities is displayed and a part displaying the name data by genre, and a genre display area displaying the genre of one piece of named data chosen. In a manner similar to the first embodiment, the display controller 203 provides the generated display with the genre scroll-up/scroll-down buttons 106A and 106B, the select buttons 106C and 106D, and the confirmation button 106E functioning as buttons for entering various commands interlockingly with the operating unit 106.

In the second embodiment, when any one piece of name data in the recommended destinations is chosen, the message indicating that the destination is a recommended destination and the genre to which the name data belongs are displayed in the genre display area.

The display controller 203 may generate display data in which name data arranged in the part showing the recommended destinations is arranged also in the genres together with the other name data displayed genre by genre, or display data in which the name data arranged in the part showing the recommended destinations is arranged so as to be excluded from the genres.

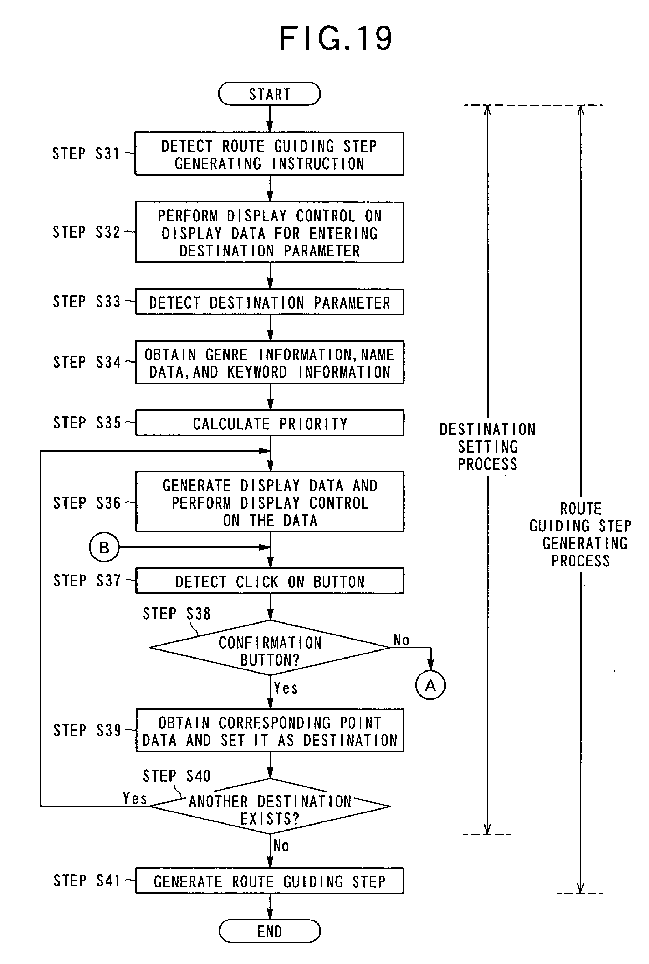

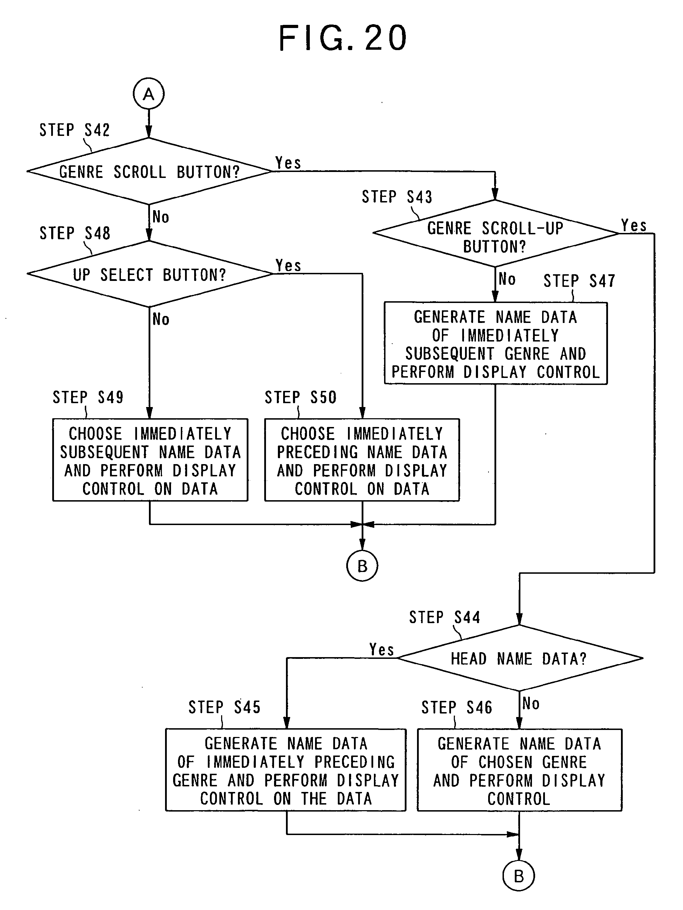

Next, the route guiding step generating process and the destination setting process of the second embodiment will be described with reference to FIGS. 19 and 20. FIGS. 19 and 20 are flowcharts showing operations of the route guiding step setting process and the destination setting process in the system controller 204 of the second embodiment.

First, when an instruction of generating the route guiding step is entered by the user to the system controller 204 via the operating unit 106 and the system controller 204 detects the instruction (step S31), to generate the route guiding step by controlling the display controller 203, the system controller 204 makes the display controller 203 display a menu screen showing a message urging registration of necessary information such as the destination parameters and showing the information on the display 109 (step S32).

Next, a predetermined menu screen is displayed. The user sets departure date, accompanying person, rest place, and destination area with the operating unit 106 while referring to the menu screen displayed on the display 1099. When the system controller 204 detects start of setting of a destination with the operating unit 106 (step S33), the system controller 204 makes the display controller 203 obtain name data and genre information of point data stored in the map data storing unit 105, and makes the priority calculating unit 202 obtain the name data and keyword information (step S34).

Subsequently, the system controller 204 makes the priority calculating unit 202 calculate priorities in the points and output the priority information to the display controller 203 as described above (step S35).

The system controller 204 makes the display controller 203 generate display data in which the name data is arranged genre by genre at the same hierarchical level on the basis of the name data, genre information, and priority information of the point data and execute the display control in the display 109, and waits for an input from the operating unit 106 (step S36) .

In the input waiting state, the display controller 203 allows the generated display data to be displayed on the display 109 under control of the system controller 204 and makes the display area of display data flash or displays the cursor on the display area as a standard state (default). In this state, the display data belongs to a genre arranged at the top and the name data arranged at the head of the genre is arranged.

After that, when any of the buttons provided for the operating unit 106 is clicked by the user and the click of the button is detected by the operating unit 106 (step S37), the system controller 204 determines whether or not the clicked button is the confirmation button 106E for confirming the flashing name data or name data on which the cursor exists as a destination (step S38).

When the clicked button is determined as the confirmation button for confirming the flashing name data or name data on which the cursor exists as a destination, the system controller 204 moves to the process of step S39. When the clicked button is not determined as the confirmation button, the system controller 204 moves to the process of step S42.

When the system controller 204 determines that the clicked button is the button for confirming the data as a destination, the system controller 204 obtains point data in the flashing name data or the name data on which the cursor exists from the map data storing unit 105, and sets the obtained point data as a destination (step S39).

Subsequently, a check is made to see whether another destination is set or not (step S40). After that, the system controller 204 generates a route guiding step on the basis of the set destination, and stores the generated route guiding step as the route guiding step data into the ROM/RAM 115 (step S41) .

At the time of setting another destination, the system controller 204 controls the display controller 203 to generate display data asking whether another destination is set or not and execute the display control on the display data, and detects the presence or absence of setting of another destination on the basis of operation of the operating unit 106. In the case where the system controller 204 detects an instruction of setting another destination, the system controller 204 stores the data of the set destination into the ROM/RAM 115 and returns to the process of step S36.

In the case where the system controller 204 detects absence of setting of another destination and generates the route guiding step data, the system controller 204 stores the route guiding step data into the ROM/RAM 115 and, after that, on condition that start of route guidance is entered via the operating unit 106, starts the route guidance on the basis of the route guiding step data stored in the ROM/RAM 115.

On the other hand, when the system controller 204 determines that the detected button is not the button for confirming the name data as a destination, the system controller 204 determines whether the detected button is the genre scroll-up/scroll-down buttons 106A and 106B or not (step S42) . If "Yes", the system controller 204 determines whether the detected button is the genre scroll-up button 106A or not (step S43). If "No", the system controller 204 moves to step S48.

Since each of name data groups in the recommended destination is handled as one genre, for example, in the embodiment, the next genre of the recommended destination is the lake genre.

When the system controller 204 determines that the detected button is the genre scroll-up button 106A, the system controller 204 determines whether the chosen data is the name data at the head in the genre of the chosen name data or not (step S44).

When the system controller 204 determines that the chosen name data is the name data arranged at the head of the genre, the system controller 204 makes the display controller 204 generate display data for displaying name data in the genre immediately preceding the genre to which the chosen name data belongs and execute the display control in the display 109, waits for an input from the operating unit 106, and moves to the process of step S37 (step S45) . In the case where the system controller 204 determines that the chosen data is not the name data arranged at the head of the genre, the system controller 204 allows display data for displaying name data using, as a reference, the name data arranged at the head of the genre to which the chosen name data belongs to be generated, allows the display control in the display 109 to be executed, waits for an input from the operating unit 106, and moves to the process of step S37 (step S46).

In a manner similar to the first embodiment, in the case of displaying the name data of the immediately preceding genre, the display controller 203 makes the name data arranged at the head of the immediately preceding genre flash or moves the cursor onto the name data, and displays the display data in which the name data flashes or the cursor is on the name data on the display 109. In the case where the immediately preceding genre is selected in the genre arranged at the head, display data for displaying the name data using, as a reference, the name data in the genre arranged at the end is generated and the display control in the display 109 is executed.

In the case of displaying name data of a chosen genre, the display controller 203 makes name data arranged at the head of the chosen genre flash or moves the cursor onto the name data and displays the display data in which the name data is flashing or the cursor is moved on the name data on the display 109.

Further, in the case where the genre of the recommended destinations is designated, the display controller 203 displays not only the chosen genre but also a message that the chosen genre is a recommended destination.

On the other hand, when the system controller 204 determines that the detected button is not the genre scroll-up bottom 106A but is the genre scroll-down button 106B, the system controller 204 makes the display controller 203 generate display data for displaying name data in the genre immediately subsequent to the genre to which the chosen name data belongs and execute the display control in the display 109, waits for an input from the operating unit 106, and moves to the process of step S37 (step S47).

In this case, the display controller 203 makes name data arranged at the head of the following genre or moves the cursor onto the name data and allows display data in which the name data is flashing or the cursor is moved onto the name data to be displayed on the display 109.

When it is determined in step S18 that the detected button is not the genre scroll-up/scroll-down buttons 106A and 106B but is the select buttons 106C and 106D, the system controller 204 determines whether the detectedbutton is the up select button 106C or not (step S48) ..

When the system controller 204 determines that the detected button is the up select button 106C, the system controller 204 allows display data for choosing the name data immediately preceding the chosen name data to be generated, allows display control in the display 109 to be executed, waits for an input from the operating unit 106, and moves to the process of step S37 (step S49).

In this case, the display controller 203 makes the immediately preceding name data flash or moves the cursor onto the immediately preceding name data and allows display data in which the name data is flashing or the cursor is moved on the name data to be displayed on the display 109.

On the other hand, when the system controller 204 determines that the detected button is not the up select button 106C but is the down select button 106D, the system controller 204 makes the display controller 203 generate display data for displaying the name data immediately subsequent to the chosen name data and execute display control in the display 109, waits for an input from the operating unit 106, and moves to the process of step S14 (step S50).

In this case, in a manner similar to the case of the immediately preceding name data, the display controller 203 makes the immediately preceding name data flash or moves the cursor onto the immediately preceding name data and allows display data in which the name data is flashing or the cursor is moved on the name data to be displayed on the display 109.

The processes in step S42 to S50 in the second embodiment are basically similar to those in steps S19 to S28 in the first embodiment.

As described above, the navigation apparatus 200 of the second embodiment for obtaining point data by allowing the user to select at least one piece of point data from a plurality of pieces of point data to be selected by the user, which are stored in the map data storing unit 105 in a manner similar to the first embodiment has the display controller 203 and the operating unit 106. In the case where the point data is stored so as to be associated with genre information indicative of the attribute of the point data and name data indicative of the name of the point data, the display controller 203 obtains the name data and the genre information of each point from the map data storing unit 105, generates display data for displaying the names of the point data arranged by genre information at the same hierarchical level on the basis of the obtained name data and genre information, and displays the generated display data on the display 109. The operating unit 106 is used for selecting the genre to which point data to be selected by the user belongs, and is also used for selecting the name of one piece of map data from the selected genre.

With the configuration, the navigation apparatus 200 of the second embodiment generates display data for displaying name information of the point data arranged by genre information at the same hierarchical level on the basis of the obtained genre information.

Therefore, in a manner similar to the first embodiment, the visibility for users at the time of allowing the user to select a point as a destination from name data divided by genre can be improved, so that the user can set a destination easily and accurately.

The navigation apparatus 200 of the second embodiment has the configuration that, on the basis of name of point data selected with the operating unit 106, the display controller 203 obtains point data having the name from the map data storing unit 105, generates display data for displaying the genre selected with the operating unit 106 and performs display control on the display data interlockingly with the selecting operation executed by using the operating unit 106, and generates display data at the time of selecting the name of point data by the operating unit 106 and performs display control on the display data interlockingly with the selecting operation executed by using the operating unit 106.

With the configuration, the navigation apparatus 200 of the second embodiment generates display data for displaying the names of the point data, which are arranged by genre information at the same hierarchical level on the basis of the obtained name data and genre information, and displays the generated display data on the display 109. When a genre to which point data to be selected by the user belongs is selected and the name of one piece of point data is selected from the selected genre, interlockingly with the selecting operation executed by using the operating unit 106, generation of display data for displaying the genre selected with the operating unit 106 and display control on the display data is performed, and generation of display data at the time of selection of the name of the point data by the operating unit 106 and the display control on the display data is performed.

Therefore, in a manner similar to the first embodiment, a point as a destination can be selected from the name data divided by genre and, also in the case of retrieving a point belonging to another genre, the search can be executed easily. As a result, one piece of data can be easily and promptly selected from a plurality of pieces of data, and the operability and the visibility in operations for users can be improved.

The navigation apparatus 200 of the second embodiment has: in addition to the effects of the first embodiment, the priority calculating unit 202, in the case where point data and priority information regarding a priority showing that the point data has to be preferentially selected more than the other point data is recorded on the map data storing unit 105, for obtaining the priority information at the time of generating display data, and calculating the priority of the point data on the basis of the obtained priority information; and the display controller 203 for generating display data in which names of point data having predetermined priorities are arranged at the head of all of genre information independently of the genres on the basis of the result of calculation of priorities by the priority calculating unit 202, and performing display control on the display data.

With the configuration, the navigation apparatus 200 of the second embodiment has the priority calculating unit 202 for obtaining the priority information at the time of generating display data, and calculating the priority of the point data on the basis of the obtained priority information. On the basis of the result of calculation of priorities by the priority calculating unit 202, display data is generated in which names of point data having predetermined priorities are arranged at the head of all of genre information independently of the genres, and display control on the display data is performed.

Therefore, point data to be preferentially set as a destination can be selected easily more than the other point data, so that one piece of data can be easily and promptly selected from a plurality of pieces of data. Thus, the operability and the visibility in operations for users can be improved.

In the second embodiment, the priority calculating unit 220 calculates the priorities on the point data stored in the map data storing unit 105 on the basis of the input destination information. It is also possible to add priority information indicative of a priority to the point data and pre-store the resultant data. The display controller 203 may generate display data on the basis of the priority information added.

In the second embodiment, the display controller 203 generates display data or displaying name data as recommended destinations arranged in order of priorities calculated. The display data for displaying name data as recommended destinations may be also generated genre by genre, in place of the priorities, in the order of the Japanese syllabary or in the order of areas.

In the second embodiment, the navigation apparatus 200 performs the route guiding step generating process including the destination setting process. It is also possible to provide the navigation apparatus 200 having the information recording medium for storing the point data and map data with a computer and a recording medium, store a program for executing the route guiding step generating process onto the recording medium, read the program by the computer, and perform a route guiding step generating process similar to the above.

In the second embodiment, the navigation apparatus 200 performs the route guiding step generating process including the destination setting process. It is also possible to provide the navigation apparatus 200 having the information recording medium for storing the point data and map data with a computer and a recording medium, store a program for executing the route guiding step generating process onto the recording medium, read the program by the computer, and perform a route guiding step generating process similar to the above.

In the second embodiment, point data is used for setting a destination in the navigation apparatus 200. The invention, however, is not limited to the use. The point data can be also used for setting the present position or retrieving other points .

In the second embodiment, the display controller 111 generates display data in a list in which name data of destinations is arranged at the same hierarchical level on the genre unit basis at the time of setting a destination that the vehicle is to reach by the route guidance. In a manner similar to the first embodiment, it is also possible to rearrange the name data on the genre unit basis on the basis of the priorities.

In this case, in a manner similar to the first embodiment, in step S36 in the destination setting process of FIG. 19, the system controller 204 performs a process similar to the process of displaying name data genre by genre on the basis of the priorities shown in FIG. 12. In a manner similar to the first embodiment, on the basis of the priorities on points, the system controller 114 calculates priorities by calculating scores or the like on the basis of data when the destinations were selected by the user in the past or on the basis of predetermined parameters such as a parameter which is preset by the user, a hobby of the user, weather of a place to be set as a destination, date of arrival at a destination, and an accompanying person who accompanies the user to the destination, and the like.

## Claims

1. A data selecting apparatus for obtaining actual data by allowing the user to select at least one piece of actual data from a plurality of pieces of actual data to be selected by the user, which are stored in storing means,
wherein when each of the plurality of pieces of actual data is stored so as to be associated with attribute information indicative of attribute of the actual data and name information indicative of the name of the actual data, the apparatus comprises:
first obtaining means for obtaining the name information and attribute information of each actual data from the storing means;
display control means for generating display data for displaying the name information of the actual data, which is arranged by the attribute information at the same hierarchical level on the basis of the obtained attribute information, and displaying the generated display data on display means;
first selecting means used for selecting an attribute information group to which actual data to be selected by the user belongs;
second selecting means used for selecting a name of one piece of the actual data from the selected attribute information group; and
second obtaining means for obtaining actual data having the name on the basis of the name of the actual data selected with the second selecting means from the storing means.

2. The data selecting apparatus according to claim 1, wherein the display control means performs generation of display data for displaying an attribute information group selected by the first selecting means and display control on the display data interlockingly with selecting operation executed by using the first selecting means, and performs generation of display data at the time when the name of the actual data is selected by the second selecting means and display control on the display data interlockingly with selecting operation executed by using the second selecting means.

3. The data selecting apparatus according to claim 1 or 2, wherein the first selecting means is single selecting means for selecting an attribute information group and
each time another attribute information group is selected by the single selecting means, the display control means switches the present attribute information group to the another attribute information group, generates names of actual data of the attribute information group as the display data, and performs display control on the display data.

4. The data selecting apparatus according to any one of claims 1 to 3, wherein the second selecting means has:
choosing means used for choosing, as a name of actual data to be selected, names of actual data one by one in the order on the basis of the names of actual data in the attribute information group displayed in the display data; and
confirming means for confirming the name of the chosen one piece of actual data as the name of actual data to be selected.

5. The data selecting apparatus according to claim 1 or 2, wherein when the first selecting means switches to select another attribute information group which is at least immediately preceding or subsequent to the present attribute information group, the first selecting means has:
preceding-part switching means for selecting the immediately preceding attribute information group; and
subsequent-part switching means for selecting the immediately subsequent attribute information group.

6. The data selecting apparatus according to claim 5, wherein the second selecting means has:
choosing means used for choosing names of actual data one by one in the order on the basis of the names of actual data in the attribute information group displayed in the display data; and
confirming means for confirming the name of the chosen one piece of actual data as the name of actual data to be selected, and
when the name of actual data at the head of an arbitrary attribute information group is chosen by the choosing means and attribute information of the preceding group is selected by the preceding-part switching means, the display control means displays display data for the time when the attribute information of the preceding group is selected on the display means, and
when the name of another data different from the actual data at the head is chosen and attribute information of the preceding group is selected by the preceding-part switching means, the display control means displays the display data having, as a reference, the name of the actual data at the head on the display means.

7. The data selecting apparatus according to claim 6, wherein the second selecting means has:
choosing means used for choosing names of actual data one by one in the order on the basis of the names of actual data in the attribute information group displayed in the display data; and
confirming means for confirming the name of the chosen one piece of actual data as the name of actual data to be selected, and
when the name of arbitrary actual data in an arbitrary attribute information group is chosen by the choosing means and attribute information of the subsequent group is selected by the preceding-part switching means, the display control means displays display data for the time when the attribute information of the subsequent group is selected on the display means.

8. The data selecting apparatus according to any one of claims 1 to 7, wherein when one of the attribute information groups is selected by the first selecting means, the display control means performs generation of the display data having attribute name of the selected attribute information and performs display control on the display data.

9. The data selecting apparatus according to any one of claims 1 to 8, wherein the display control means performs generation of at least one of the display data in which different colors are superimposed on attribute information groups and the display data in which border information indicative of borders between the attribute information groups are superimposed, and performs display control on the display data.

10. The data selecting apparatus according to any one of claims 1 to 9, wherein when one of the attribute information groups is selected by the first selecting means; the display control means generates at least one of the display data in which the selected attribute information group is distinguished from the other attribute information groups by using different colors and the display data in which border information indicative of a border between the selected attribute information group and the other attribute information groups is superimposed, and performs display control on the display data.

11. The data selecting apparatus according to claims 1 to 10, wherein when there are a plurality of kinds of the attribute information, the display control means generates display data for displaying names of actual data arranged by attribute information at the same hierarchical level and performs display control on the display data for each kind of the attribute information on the basis of the obtained name information and attribute information.

12. The data selecting apparatus according to claim 11, wherein when the first selecting means is constructed by single selecting means for selecting an attribute information group,
the apparatus further comprises designating means used for designating the kind of the attribute information, and
the display control means interlocks with designating operation executed by using the designating means and, in the case where arbitrary attribute information is designated and the designated attribute information is designated by the designating means, switches the presently displayed attribute information group to another attribute information group, generates the display data displaying names of actual data, and performs display control on the display data.

13. The data selecting apparatus according to any one of claims 1 to 12, wherein when the actual data and priority information on a priority indicating that the actual data has to be preferentially selected more than the other actual data is recorded in the storing means,
the display control means has:
calculating means for obtaining the priority information at the time of generating the display data and calculating priority of each actual data on the basis of the obtained priority information; and
generation control means, on the basis of the result of calculation of each priority by the calculating means, for performing generation of the display data in which names of actual data having predetermined priorities are arranged at the head of all of attribute information independently of the attribute information groups, and performing display control on the display data.

14. A navigation apparatus for obtaining point data by allowing the user to select at least one piece of point data from point data of points stored in storing means,
wherein when each of the plurality of pieces of point data is stored so as to be associated with attribute information indicative of attribute of the point data and name information indicative of the name, the apparatus comprises:
first obtaining means for obtaining the name information and attribute information of each point data from the storing means;
display control means for generating display data for displaying the name information of the point data, which is arranged by the attribute information at the same hierarchical level on the basis of the obtained attribute information, and displaying the generated display data on display means;
first selecting means used for selecting an attribute information group to which point data to be selected by the user belongs;
second selecting means used for selecting a name of one piece of the point data from the selected attribute information group;
second obtaining means for obtaining point data having the name on the basis of the name of the point data selected with the second selecting means from the storing means; and
setting means for setting a destination in route guidance on the basis of the obtained point data.

15. The navigation apparatus according to claim 14, wherein the display control means performs generation of display data for displaying an attribute information group selected by the first selecting means and display control on the display data interlockingly with selecting operation executed by using the first selecting means, and performs generation of display data at the time when the name of the actual data is selected by the second selecting means and display control on the display data interlockingly with selecting operation executed by using the second selecting means.

16. The navigation apparatus according to claim 14 or 15, wherein the second selecting means comprises:
choosing means used for choosing names of point data one by one in the order on the basis of the names of point data in the attribute information group displayed in the display data; and
confirming means for confirming the name of the chosen one piece of point data as the name of actual data to be selected.

17. The navigation apparatus according to claim 14 or 15, wherein when the first selectingmeans switches to select another attribute information group which is at least immediately preceding or subsequent to the present attribute information group, the first selecting means has:
preceding-group switching means for selecting the immediately preceding attribute information group; and
subsequent-group switching means for selecting the immediately subsequent attribute information group.

18. The navigation apparatus according to any one of claims 14 to 17, wherein when the point data and priority information on a priority indicating that the point data has to be preferentially selected more than the other point data is recorded in the storing means,
the display control means has:
calculating means for obtaining the priority information at the time of generating the display data and calculating priority of each actual data on the basis of the obtained priority information; and
generation control means, on the basis of the result of calculation of each priority by the calculating means, for performing generation of the display data in which names of point data having predetermined priorities are arranged at the head of all of attribute information independently of the attribute information groups, and performing display control on the display data.

19. A data selecting method for obtaining actual data by allowing the user to select at least one piece of actual data from a plurality of pieces of actual data to be selected by the user, which are stored in storing means,
wherein when each of the plurality of pieces of actual data is stored so as to be associated with attribute information indicative of attribute of the actual data and name information indicative of the name of the actual data, the method comprises:
a first obtaining step of obtaining the name information and attribute information of each actual data from the storing means;
a display step of generating display data for displaying the name information of the actual data, which is arranged by the attribute information at the same hierarchical level on the basis of the obtained attribute information, and displaying the generated display data on display means; and
a second obtaining step of, when the name of one piece of actual data is selected from the displayed attribute information group by using selecting means on the basis of the display data displayed on the display means, obtaining actual data having the name of the selected actual data from the storing means.

20. The data selecting method according to claim 19, wherein the display step comprises:
a first display control step of generating first display data for displaying name information of the actual data arranged by the attribute information and at the same hierarchical level on the basis of the obtained attribute information, and displaying the generated first display data on display means; and
a second display control step of, when an attribute information group to which actual data to be selected by the user belongs is selected by using the selecting means on the basis of the first display data displayed on the display means, generating second display data having the name of actual data of the selected attribute information group, and displaying the generated second display data on the display means.

21. A navigation method for obtaining point data by allowing the user to select at least one piece of point data from points stored in storing means,
wherein when each of the plurality of pieces of point data is stored so as to be associated with attribute information indicative of attribute of the actual data and name information indicative of the name of the data, the method comprises:
a first obtaining step of obtaining the name information and attribute information of each point data from the storing means;
a display step of generating display data for displaying the name information of the point data, which is arranged by the attribute information at the same hierarchical level on the basis of the obtained attribute information, and displaying the generated display data on display means;
a second obtaining step of, when the name of one piece of point data is selected from the displayed attribute information group by using selecting means on the basis of the display data displayed on the display means, obtaining point data having the name of the selected point data from the storing means; and
a setting step of setting a destination in route guidance on the basis of the obtained point data.

22. The navigation method according to claim 21, wherein the display step comprises:
a first display control step of generating first display data for displaying name information of the point data arranged by the attribute information and at the same hierarchical level on the basis of the obtained attribute information, and displaying the generated first display data on display means; and
a second display control step of, when an attribute information group to which point data to be selected by the user belongs is selected by using the selecting means on the basis of the first display data displayed on the display means, generating second display data having the name of point data of the selected attribute information group, and displaying the generated second display data on the display means.

23. A data selecting program for obtaining actual data by allowing the user to select at least one piece of actual data from a plurality of pieces of actual data to be selected by the user, which are stored in storing means by a computer,
wherein when each of the plurality of pieces of actual data is stored so as to be associated with attribute information indicative of attribute of the actual data and name information indicative of the name, the computer is allowed to function as:
first obtaining means for obtaining the name information and attribute information of each actual data from the storing means;
display control means for generating display data for displaying the name information of the actual data, which is arranged by the attribute information at the same hierarchical level on the basis of the obtained attribute information, and displaying the generated display data on display means; and
second obtaining means for, when the name of one piece of actual data is selected from the displayed attribute information group by using selecting means on the basis of the display data displayed on the display means, obtaining actual data having the name of the selected actual data from the storing means.

24. The data selecting program according to claim 23, wherein the computer is allowed to function as the display control step of generating first display data for displaying name information of the actual data arranged by the attribute information and at the same hierarchical level on the basis of the obtained attribute information and displaying the generated first display data on display means, when an attribute information group to which the actual data to be selected by the user belongs is selected by using the selecting means on the basis of the first display data displayed on the display means, generating second display data having names of actual data of the selected attribute information group, and displaying the generated second display data on the display means.

25. A recording medium on which the data selecting program according to claim 23 or 24 is recorded computer-readably.

26. A navigation program for obtaining point data by allowing the user to select at least one piece of point data from point data of points stored in storing means,
wherein when each of the plurality of pieces of point data is stored so as to be associated with attribute information indicative of attribute of the actual data and name information indicative of the name of the data, the computer is allowed to function as:
first obtaining means for obtaining the name information and attribute information of each point data from the storing means;
display control means for generating display data for displaying the name information of the point data, which is arranged by the attribute information at the same hierarchical level on the basis of the obtained name information and attribute information, and displaying the generated display data on display means;
second obtaining means for, when the name of one piece of point data is selected from the displayed attribute information group by using selecting means on the basis of the display data displayed on the display means, obtaining point data having the name of the selected point data from the storing means; and
setting means for setting a destination in route guidance on the basis of the obtained point data.

27. The navigation program according to claim 26, wherein the computer is allowed to function as the display control step of generating first display data for displaying name information of the point data arranged by the attribute information and at the same hierarchical level on the basis of the obtained attribute information and displaying the generated first display data on display means, when an attribute information group to which the point data to be selected by the user belongs is selected by using the selecting means on the basis of the first display data displayed on the display means, generating second display data having names of point data of the selected attribute information group, and displaying the generated second display data on the display means.

28. A recording medium on which the navigation program according to claim 26 or 27 is recorded computer-readably.
